# EUROPÄISCHE PATENTANMELDUNG

(11) **EP 4 628 765 A1**
(43) Veröffentlichungstag der Anmeldung: **08.10.2025**
(21) Anmeldenummer: 25168266.2
(22) Anmeldetag: 03.04.2025
(51) Int. Cl.: F16K 3/24, F16K 3/26, F16K 11/07, F16K 27/04, F16K 31/04, F25B 41/20, F25B 41/26

(54) **MEHRWEGEVENTIL ZUR STEUERUNG EINES MEDIUMS**

(30) Priorität: 05.04.2024 DE 102024109600; 02.05.2024 DE 102024112297; 05.03.2025 DE 102025108332
(71) Anmelder: Otto Egelhof GmbH & Co. KG, 70736 Fellbach (DE)
(72) Erfinder: Bopp, Robin, 7357 Lorch (DE); Willers, Dr. Eike, 70469 Stuttgart (DE)
(74) Vertreter: Mammel und Maser Patentanwälte PartG mbB

(57) **Zusammenfassung**

Die Erfindung betrifft ein Mehrwegeventil (11) zur Steuerung eines Mediums, insbesondere in einem Kältemittelkreislauf einer Kälteanlage mit einer Wärmepumpenfunktion, mit einem Antrieb (27), mit einem Ventilkörper (37), dessen Hubbewegung entlang einer Achse durch ein Stellelement (34) des Antriebs (27) ansteuerbar ist, mit einer zum Antrieb (27) weisenden Ventilkörperkammer (36), in welche der Ventilkörper (37) zumindest teilweise verfahrbar ist, wobei der Ventilkörper (37) rohrförmig ausgebildet ist und sich entlang der Hubachse erstreckt und in einer ersten Endposition (39) der Hubbewegung zumindest eine erste Druckkammer (56) zwischen einem Einlass (12) und einem Auslass (14, 15) und zumindest eine weitere Druckkammer (57) zwischen dem Einlass (12) und zumindest einem weiteren Auslass (15, 14) durchquert, wobei jeder Druckkammer (56, 57) zumindest eine Dichtung (52, 58, 62, 71) zur Anlage an dem Ventilkörper (37) zugeordnet ist.

## Beschreibung

Die Erfindung betrifft ein Mehrwegeventil zur Steuerung eines Mediums, insbesondere in einem Kältemittelkreislauf einer Kälteanlage mit einer Wärmepumpenfunktion.

Aus der DE 10 2017 102 841 A1 ist ein Mehrwegeventil zur Steuerung eines Kältemittelkreislaufes einer Kälteanlage mit Wärmepumpenfunktion bekannt. Dieses Mehrwegeventil umfasst ein Gehäuse mit einem Einlass, der mit einem Fluidkanal mit einem Regulierraum im Gehäuse verbunden ist. Des Weiteren umfasst das Gehäuse eine erste und zweite Auslassöffnung, die ebenfalls mit dem Regulierraum verbunden sind. In dem Regulierraum ist eine Drehschieberanordnung vorgesehen, welche eine erste Steuerscheibe und eine zweite Steuerscheibe umfasst. Zumindest die erste Steuerscheibe der Drehschieberanordnung wird über einen Antrieb betätigt, sodass wahlweise die erste und/oder die zweite Auslassöffnung ansteuerbar ist. Die Steuerscheiben der Drehschieberanordnung sind aus einem verschleißfesten und reibungsarmen Material, wie beispielsweise Keramik, ausgebildet. Die Anforderungen an einen einfachen Aufbau und geringere Stellkräfte als auch eine Reduzierung des Bauvolumens steigt stetig an.

Der Erfindung liegt die Aufgabe zugrunde, ein Mehrwegeventil zur Steuerung eines Mediums, insbesondere in einem Kältemittelkreislauf einer Kälteanlage mit einer Wärmepumpenfunktion, vorzuschlagen, welches einen einfachen Aufbau aufweist und bei welchen das Ventil mit geringen Stellkräften betätigbar ist.

Diese Aufgabe wird durch ein Mehrwegeventil gelöst, bei welchem ein Antrieb vorgesehen ist sowie ein Ventilkörper, dessen Hubbewegung entlang einer Hubachse durch ein Stellelement des Antriebs ansteuerbar ist. Des Weiteren umfasst das Mehrwegeventil eine zum Antrieb weisende Ventilkörperkammer, in welche der Ventilkörper zumindest teilweise verfahrbar ist. Der Ventilkörper ist rohrförmig ausgebildet und erstreckt sich entlang der Hubachse, wobei der Ventilkörper in zumindest einer Endposition seiner Hubbewegung zumindest eine erste Druckkammer zwischen einem Einlass und einem ersten Auslass durchquert und zumindest in eine zweite Druckkammer zwischen dem Einlass und zumindest einem weiteren Auslass hineinragt oder diese durchquert, wobei jeder Druckkammer zumindest eine Dichtung zur Anlage an dem Ventilkörper zugeordnet ist. Durch diese rohrförmige Ausgestaltung des Ventilkörpers, welcher mit der ersten und zumindest einer zweiten Druckkammer kommuniziert, ist ermöglicht, dass eine einfache und platzsparende Anordnung geschaffen ist. Zudem wird ermöglicht, dass durch diesen Ventilkörper geringe Stellkräfte erforderlich sind, um den rohrförmigen Ventilkörper von der einen Endposition in eine weitere Endposition und/oder in Zwischenpositionen zur individuellen Ansteuerung der Druckkammern zu verfahren.

Bevorzugt ist vorgesehen, dass der rohrförmige Ventilkörper zumindest zwei Durchtrittsöffnungen aufweist, wobei eine erste Durchflussöffnung einem Einlass zugeordnet ist und zumindest eine zweite Durchflussöffnung im Ventilkörper vorgesehen ist, welche dem einen Auslass und/oder dem zumindest einen weiteren Auslass zugeordnet ist. Diese Ausgestaltung ermöglicht in einfacher Weise, dass durch die Ansteuerung einer Hubbewegung des Ventilkörpers wahlweise der Einlass mit dem ersten Auslass oder dem zweiten Auslass verbindbar ist. Auch ist möglich, dass der Einlass mit dem ersten und dem zweiten Auslass für einen Mischbetrieb verbindbar ist.

Bevorzugt ist ein Anschlag für die Hubbewegung des Ventilkörpers in einer ersten Endposition und in einer zweiten oder weiteren Endposition, insbesondere in der Ventilkörperkammer, vorgesehen. Dadurch ist ermöglicht, dass definierte Ausgangslagen des Ventilkörpers eingenommen werden können, von welcher aus die Hubbewegung durch den Antrieb gezielt angesteuert wird.

Zwischen dem Ventilkörper und der Ventilkörperkammer ist bevorzugt ein Druck-Bypass vorgesehen. Dies ermöglicht, dass ein Druckausgleich geschaffen wird, sodass eine verringerte Stellkraft des Antriebs bei einer Verfahrbewegung des Ventilkörpers aus der ersten Endposition in die weitere Endposition ermöglicht ist. Durch die rohrförmige Ausgestaltung des Ventilkörpers, welche zumindest eine erste und eine zweite Durchtrittsöffnung aufweist, ist ermöglicht, dass durch die zumindest eine Durchtrittsöffnung ein anliegender Druck des Mediums auch in der Ventilkörperkammer vorliegt, sodass nahezu keine Druckdifferenz einer Öffnungs- und Schließbewegung bzw. einer Bewegung des Ventilkörpers entgegenwirkt.

Die zumindest eine der Druckkammern zugeordnete Dichtung ist bevorzugt als eine radiale Dichtung ausgebildet, welche am Außenumfang des rohrförmigen Ventilkörpers anliegt. Dadurch kann zum einen eine hinreichende Abdichtung und zum anderen eine Stellbewegung des Ventilkörpers mit verringerten Stellkräften erzielt werden. Zudem kann durch die radiale Dichtung, welche am Außenumfang des Ventilkörpers anliegt, eine Führung erzielt werden. Alternativ kann vorgesehen sein, dass zumindest eine der Druckkammer zugeordnete Dichtung als eine axiale Dichtung ausgebildet ist, welche an einer Stirnseite des rohrförmigen Ventilkörpers zur Anlage kommen kann. Auch kann vorgesehen sein, dass zumindest eine radiale und zumindest eine axiale Dichtung vorgesehen sind, welche an dem rohrförmigen Ventilkörper in zumindest einer der Endpositionen abdichtend anliegen. Beispielsweise kann vorgesehen sein, dass eine mittlere Dichtung als eine radiale Dichtung ausgebildet ist, welche den Ventilkörper umgibt und zumindest eine stirnseitig zum Ventilkörper angeordnete Dichtung als eine axiale Dichtung ausgebildet ist. Die weitere, der gegenüberliegenden Stirnseite des rohrförmigen Ventilkörpers zugeordnete Dichtung kann als axiale Dichtung oder als radiale Dichtung ausgebildet sein.

Gemäß einer bevorzugten Ausführungsform ist vorgesehen, dass zwischen dem Antrieb und der ersten Druckkammer eine erste Dichtung vorgesehen ist, zwischen der ersten Druckkammer und der zweiten Drucckammer eine zweite Dichtung und zwischen dem Einlass und der zweiten Druckkammer eine dritte Dichtung vorgesehen ist. Dies ermöglicht einen einfachen Aufbau bei einem Mehrwegeventil, bei welchem ein Einlass wahlweise mit zwei Auslässen verbindbar ist. Bevorzugt ist eine Aneinanderreihung derart vorgesehen, dass stromab zu einem Einlass ein erster Auslass und stromab hierzu ein zweiter Auslass vorgesehen ist.

Bei der vorbeschriebenen Anordnung von dem Einlass, dem ersten Auslass und dem zweiten Auslass ist bevorzugt vorgesehen, dass der rohrförmige Ventilkörper eine Länge aufweist, sodass der Ventilkörper in einer ersten Endposition innerhalb der ersten bis dritten Dichtung geführt ist und in der zweiten Endposition nur in der ersten und zweiten Dichtung geführt ist. Diese Anordnung weist den Vorteil auf, dass der Aufbau des Mehrwegeventils in der Gesamtlänge verkürzt sein kann. Alternativ kann vorgesehen sein, dass der Ventilkörper eine Länge aufweist, sodass der Ventilkörper in der ersten Endposition in der ersten und zweiten Dichtung geführt und gegenüber der dritten Dichtung abgehoben ist und in einer zweiten Endposition nur in der zweiten und dritten Dichtung geführt und gegenüber der ersten Dichtung abgehoben ist. Bei dieser Ausführungsform kann der Ventilkörper verkürzt gegenüber der zuvor beschriebenen Ausführungsform ausgebildet sein.

Auch kann vorgesehen sein, dass der Ventilkörper eine Länge aufweist, so dass der Ventilkörper in der ersten und zweiten Endposition durch die zweite Dichtung geführt ist und die vorzugsweise zweite Dichtung als eine radiale Dichtung ausgebildet ist und die erste und dritte Dichtung als eine radiale und/oder axiale Dichtung ausgebildet ist, wobei der Ventilkörper in der ersten Endposition gegenüber der ersten Dichtung abgehoben ist und in der zweiten Endposition gegenüber der dritten Dichtung abgehoben ist.

Alternativ kann vorgesehen sein, dass der Ventilkörper eine Länge aufweist, sodass der Ventilkörper in der ersten Endposition in der ersten und zweiten Dichtung geführt und an der dritten Dichtung in axialer Richtung abdichtend anliegt, und in der zweiten Endposition nur in der ersten und zweiten Dichtung geführt und von der dritten Dichtung abgehoben ist.

Bei der vorbeschriebenen Anordnung von dem Einlass, im ersten Auslass und dem zweiten Auslass kann alternativ vorgesehen sein, dass der rohrförmige Ventilkörper eine Länge aufweist, sodass der Ventilkörper sowohl in der ersten Endposition als auch in der zweiten Endposition innerhalb der ersten bis dritten Dichtung geführt ist. Bei dieser Anordnung ist bevorzugt eine weitere Durchtrittsöffnung in der Umfangswand und/oder an einer Stirnseite des Ventilkörpers vorgesehen, um die einzelnen Schaltpositionen ansteuern zu können.

Gemäß einer alternativen Ausführungsform ist vorgesehen, dass zwischen dem Antrieb und der ersten Druckkammer eine erste Dichtung vorgesehen ist, zwischen dem Einlass und der ersten Druckkammer eine zweite Dichtung vorgesehen ist und zwischen dem Einlass und der zweiten Druckkammer eine dritte Dichtung vorgesehen ist. Diese alternative Ausführungsform ermöglicht, dass beispielsweise der Einlass zwischen der ersten und zweiten Druckkammer positionierbar ist. Dadurch können insbesondere nur seitlich angeordnete Leitungsanschlüsse an einer Anschlussstelle, in welcher zumindest zwei Druckkammern vorgesehen sind, vorgesehen sein.

Bei der vorgenannten Ausführungsform ist bevorzugt vorgesehen, dass der Ventilkörper sich ausgehend von einer dem Einlass zugeordneten Durchtrittsöffnung beidseitigen in Richtung auf jeweils den zumindest einen Auslass erstreckt und innerhalb von zumindest drei, insbesondere vier, vorzugsweise radialen Dichtungen, geführt ist.

Gemäß einer weiteren bevorzugten Ausführungsform kann vorgesehen sein, dass der rohrförmige Ventilkörper im Querschnitt gesehen rund oder oval ausgebildet ist. Insbesondere die ovale Ausführungsform weist den Vorteil auf, dass eine Verdrehsicherung, welche beispielsweise in der Ventilkörperkammer angeordnet sein kann, nicht erforderlich ist.

Nach einer weiteren bevorzugten Ausgestaltung des Mehrwegeventils ist vorgesehen, dass dem Antrieb zugeordnet eine erste Ventilkammerhülse vorgesehen ist, welche sich entgegengesetzt zum Antrieb erstreckt und den Ventilkörper umgibt. Diese erste Ventilkammerhülse ist der ersten Druckkammer zugeordnet, wobei zwischen der ersten Ventilkammerhülse und dem Antrieb die erste Dichtung aufgenommen ist, welche die Drucckammer zum Antrieb abdichtet. Diese Anordnung weist den Vorteil auf, dass die erste Dichtung durch die erste Ventilkammerhülse aufgenommen und zusammen mit dem Antrieb und dem rohrförmigen Ventilkörper in eine Einsetzöffnung der Anschlussstelle einsetzbar ist.

Nach einer weiteren bevorzugten Ausführungsform ist vorgesehen, dass sich die erste Ventilkammerhülse durch die erste Druckkammer hindurch erstreckt und eine zweite Dichtung aufnimmt, die gegenüberliegend zur ersten Dichtung an die erste Druckkammer angrenzend angeordnet ist. Dadurch wird ermöglicht, dass die Kammer, durch welche sich der Ventilkörper erstreckt, beidseitig abgedichtet ist und in Abhängigkeit der Position der Durchtrittsöffnung des Ventilkörpers der der ersten Druckkammer zugeordnete Auslass angesteuert werden kann.

Des Weiteren ist bevorzugt vorgesehen, dass die zweite Dichtung die erste Druckkammer zu der zweiten Druckkammer trennt oder die erste oder zweite Druckkammer zum Einlass trennt. Dies steht in Abhängigkeit der Positionierung des Einlasses zur ersten und zweiten Druckkammer. Diese Ausgestaltung weist den Vorteil auf, dass nur eine Dichtung vorzusehen ist, welche sowohl eine Abdichtung in Richtung auf die erste Drucckammer als auch auf die zweite Druckkammer oder bei der alternativen Ausführungsform eine Abdichtung zwischen der ersten Druckkammer und dem Einlass bildet.

Nach einer weiteren bevorzugten Ausführungsform ist vorgesehen, dass sich an die erste Ventilkammerhülse eine zweite Ventilkammerhülse anschließt, welche sich durch die zweite Druckkammer hindurch erstreckt, wobei die erste und die zweite Ventilkammerhülse durch eine gemeinsame zweite Dichtung getrennt sind. Dies ermöglicht einen vereinfachten Aufbau.

Des Weiteren kann bevorzugt vorgesehen sein, dass die zweite Ventilkammerhülse der ersten Ventilkammerhülse gegenüberliegend eine dritte Dichtung aufweist, welche die zweite Druckkammer gegenüber dem Einlass abdichtet. Somit kann die zweite Ventilkammerhülse, welche in die zweite Druckkammer einsetzbar ist, den sich durch die zweite Druckkammer erstreckenden Ventilkörper abdichten.

Gemäß einer alternativen Ausführungsform ist vorgesehen, dass die zweite Ventilkammerhülse der ersten Ventilkammerhülse gegenüberliegend eine dritte Dichtung aufweist, welche die zweite Druckkammer, in welcher der Einlass mündet, gegenüber einer dritten Druckkammer abdichtet, die in den zweiten Auslass mündet. Diese Ausführungsform ist bevorzugt dann vorgesehen, wenn der Einlass zwischen den beiden Auslässen angeordnet ist.

Vorteilhafterweise kann vorgesehen sein, dass die erste und die zumindest zweite Ventilkammerhülse ein- oder mehrteilig ausgebildet ist und in einer Schnittstelle zwischen den zumindest zwei Ventilkammerhülsen oder in einer Schnittstelle der mehrteiligen Ventilkammerhülse oder in einer Schnittstelle zwischen der ersten Ventilkammerhülse und dem Antrieb zumindest eine radiale Dichtung aufgenommen ist. Diese Anordnung ermöglicht, dass das Mehrwegeventil zusammen mit den Ventilkammerhülsen ein sogenanntes Cartridgegehäuse bildet, welches komplett in eine Einsetzöffnung der Anschlussstelle einsetzbar ist.

Des Weiteren kann bevorzugt vorgesehen sein, dass die erste und die zumindest eine weitere Ventilkammerhülse unlösbar miteinander verbunden sind. Dadurch kann eine Baueinheit geschaffen werden, bei welcher der Antrieb zusammen mit dem Ventilkörper in einer festen Zuordnung zu den Ventilkammerhülsen positioniert ist, sodass eine definierte Positionierung in die Anschlussstelle ermöglicht wird.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittansicht eines Mehrwegeventils in einer ersten Endposition,
- Figur 2: eine schematische Schnittansicht des Mehrwegeventils gemäß Figur 1 in einer zweiten Endposition,
- Figur 3: eine schematische Schnittansicht des Mehrwegeventils gemäß Figur 1 in einer Zwischenposition,
- Figur 4: eine schematische Schnittansicht einer alternativen Ausführungsform des Mehrwegeventils zu Figur 1 in einer ersten Endposition,
- Figur 5: eine schematische Schnittansicht einer alternativen Ausführungsform des Mehrwegeventils gemäß Figur 4 in einer zweiten Endposition,
- Figur 6: eine schematische Schnittansicht der alternativen Ausführungsform gemäß Figur 4 in einer Zwischenposition,
- Figur 7: eine schematische Schnittansicht einer alternativen Ausführungsform des Mehrwegeventils zu Figur 4 in einer ersten Endposition,
- Figur 8: eine perspektivische Ansicht auf ein stirnseitiges Ende des Ventilkörpers gemäß Figur 7,
- Figur 9: eine schematische Schnittansicht einer alternativen Ausführungsform des Mehrwegeventils gemäß Figur 4 in einer zweiten Endposition,
- Figur 10: eine schematische Schnittansicht der alternativen Ausführungsform gemäß Figur 4 in einer Zwischenposition,
- Figur 11: eine schematische Schnittansicht einer weiteren alternativen Ausführungsform des Mehrwegeventils zu Figur 4 in einer ersten Endposition,
- Figur 12: eine schematische Schnittansicht einer weiteren alternativen Ausführungsform des Mehrwegventils zu Figur 7 in einer ersten Endposition,
- Figur 13: eine schematische Schnittansicht der alternativen Ausführungsform gemäß Figur 12 in einer zweiten Endposition,
- Figur 14: eine schematische Schnittansicht der alternativen Ausführungsform gemäß Figur 12 in einer Zwischenposition,
- Figur 15: eine schematische Schnittansicht einer weiteren alternativen Ausführungsform des Mehrwegeventils zu Figur 4 in einer ersten Endposition,
- Figur 16: eine schematische Schnittansicht der alternativen Ausführungsform gemäß Figur 15 in einer zweiten Endposition,
- Figur 17: eine schematische Schnittansicht der alternativen Ausführungsform des Mehrwegeventils gemäß Figur 15 in einer Zwischenposition,
- Figur 18: eine schematische Schnittansicht einer weiteren alternativen Ausführungsform des Mehrwegeventils zu Figur 4 in einer ersten Endposition,
- Figur 19: eine schematische Schnittansicht der Ausführungsform des Mehrwegeventils gemäß Figur 18 in einer zweiten Endposition,
- Figur 20: eine schematische Ansicht der Ausführungsform des Mehrwegeventils gemäß Figur 18 in einer Zwischenposition, und
- Figur 21: ein schematisches Diagramm der steuerbaren Volumenströme gemäß dem Mehrwegeventil.

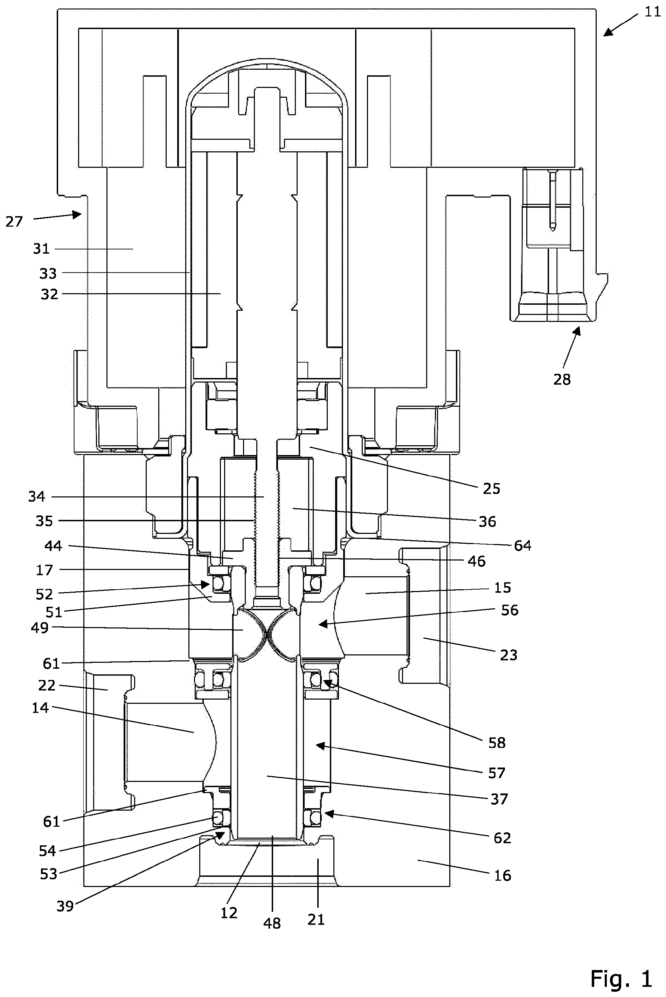

In Figur 1 ist eine schematische Schnittansicht eines Mehrwegeventils 11 dargestellt. Dieses Mehrwegeventil 11 kann zur Steuerung eines Kältemittelkreislaufes einer Kälteanlage mit einer Wärmepumpenfunktion dienen. Dieses Mehrwegeventil 11 ist beispielsweise als ein Drei-Wegeventil ausgebildet, welches einen Einlass 12 und einen ersten Auslass 14 sowie einen zweiten Auslass 15 umfasst. Alternativ kann das Mehrwegeventil 11 auch mehrere Einlässe und/oder Auslässe aufweisen.

Das Mehrwegeventil 11 ist beispielhaft in einer eingebauten Position in einer Anschlussstelle 16 dargestellt. Diese Anschlussstelle 16 umfasst eine Einsetzöffnung 17 in welche das Mehrwegeventil 11 einsetzbar und mit der Anschlussstelle 16 verbindbar ist, insbesondere mit einer lösbaren Schraubverbindung befestigbar ist. In der Anschlussstelle 16 ist eine Einlassöffnung 21 sowie eine erste und zweite Auslassöffnung 22, 23 vorgesehen. Die Einlassöffnung 21 sowie die erste und zweite Auslassöffnung 22, 23 münden in die Einsetzöffnung 17. Diese Einsetzöffnung 17 kann auch einen Regulierraum bilden, welche den Einlass 12 und den ersten Auslass 14 sowie den zweiten Auslass 15 miteinander verbindet.

Das Mehrwegeventil 11 umfasst ein Ventilgehäuse 25. Dieses Ventilgehäuse 25 ist mit einem Antrieb 27 verbunden. Der Antrieb 27 ist als ein elektrisch ansteuerbarer Antrieb 27 ausgebildet. Hierzu ist ein Anschluss 28 vorgesehen. Dieser Anschluss 28 kann zur Energieversorgung und/ oder zur Datenübertragung einer nicht näher dargestellten Elektronik in dem Antrieb 27 dienen. Der Antrieb 27 ist beispielsweise als ein Trennkappenmotor ausgebildet. Bevorzugt ist vorgesehen, dass durch die Elektronik des Antriebs 27 eine präzise Ansteuerung einer Hubbewegung eines Ventilkörpers 37 ermöglicht ist. Diese Ansteuerung kann schrittweise oder kontinuierlich erfolgen. Dadurch ist ermöglicht, dass eine definierte Hubposition des Ventilkörpers 37 angesteuert und eingenommen werden kann. Dieser Antrieb 27 umfasst einen feststehend angeordneten Stator 31 sowie einen drehend antreibbaren Rotor 32. Zwischen dem Stator 31 und dem Rotor 32 ist eine Trennkappe 33 angeordnet. Die Trennkappe 33 ist mediendicht zu der Anschlussstelle 16 bzw. zu der Einsetzöffnung 17 angeordnet. Der Rotor 32 treibt ein Stellelement 34 rotierend an. Das Stellelement 34 weist an seinem Außenumfang ein Gewinde 35 auf. Das Stellelement 34 ist in seiner Lage axial zum Rotor 32 gesichert und rotiert um dessen Längsachse. Alternativ kann auch ein Proportional-Magnetantrieb insbesondere mit einer Magnetankerlageregelung oder weitere elektrisch ansteuerbare Antriebe vorgesehen sein.

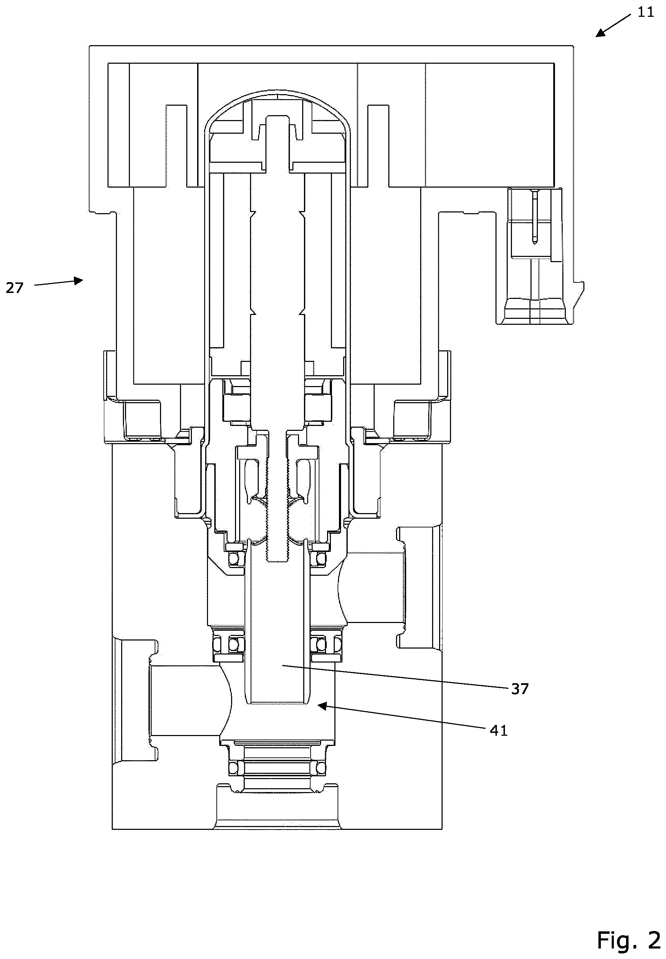

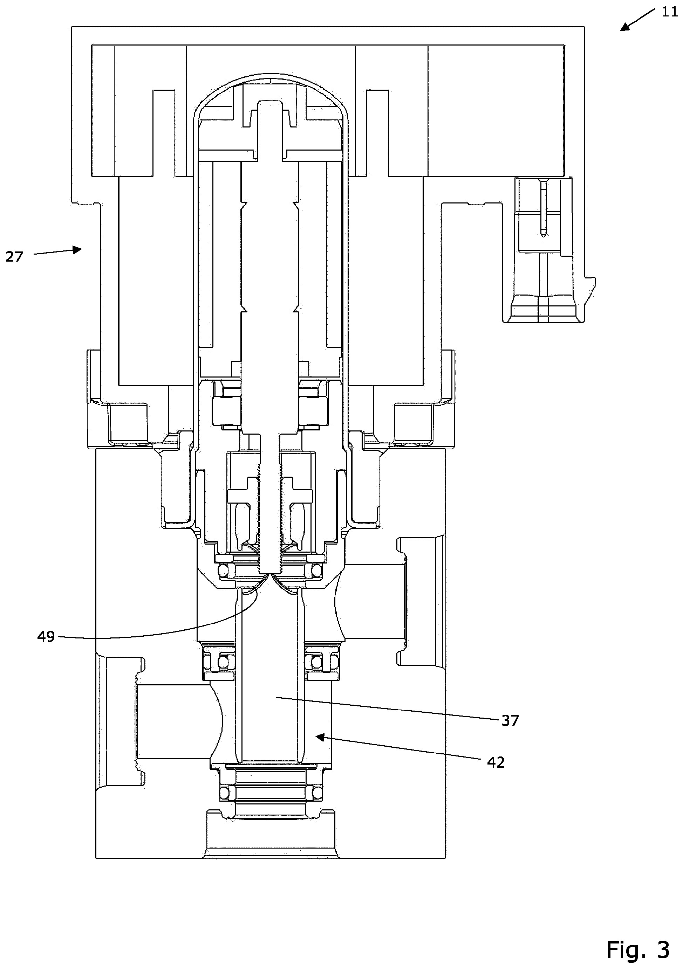

Das Stellelement 34 erstreckt sich durch das Ventilgehäuse 25 hindurch. Insbesondere ist dieses Stellelement 34 in einer Ventilkörperkammer 36 positioniert. Das Stellelement 34 ist mit einem Ventilkörper 37 verbunden. Durch das Stellelement 34 bzw. den Antrieb 27 wird der Ventilkörper 37 entlang seiner Längsachse mit einer Hubbewegung beaufschlagt. Der Ventilkörper 37 kann durch den Antrieb 27 aus einer ersten Endposition 39, welche beispielsweise in Figur 1 dargestellt ist, in eine zweite Endposition 41 übergeführt werden, welche in Figur 2 dargestellt ist. Darüber hinaus ist durch den Antrieb 27 ermöglicht, dass der Ventilkörper 37 auch in eine oder mehrere Zwischenpositionen 42 überführbar ist, wobei eine Zwischenposition 42 beispielhaft in Figur 3 dargestellt ist.

Der Ventilkörper 37 ist zum Stellelement 34 durch eine Verdrehsicherung 44 verdrehgesichert gelagert. Die Verdrehsicherung 44 ist innerhalb der Ventilkörperkammer 36 verfahrbar. Beispielsweise ist am Außenumfang der Verdrehsicherung 44 eine Abflachung oder eine Feder, die in einer Nut der Ventilkörperkammer 36 geführt wird, oder dergleichen vorgesehen.

Zwischen dem Ventilkörper 37 und der Ventilkörperkammer 36 ist ein Druck-Bypass 46 vorgesehen. Dieser Druck-Bypass 46 ist zwischen dem Gewinde 35 des Stellelementes 34 und der Verdrehsicherung 44 ausgebildet, beispielsweise als eine Abflachung an dem Stellelement 34. Auch kann der Druck-Bypass 46 zwischen der Verdrehsicherung 44 und der Ventilkörperkammer 36 ausgebildet sein.

Der Ventilkörper 37 ist rohrförmig ausgebildet. Der Ventilkörper 37 aus einem Kunststoff ausgebildet sein. Auch kann der Ventilkörper 37 aus einer Leichtmetalllegierung und weiteren Materialien ausgebildet sein, welche für den Einsatz von verschiedenen Kältemittel geeignet sind. Ein Endabschnitt des Ventilkörpers 37 ist mit dem Stellelement 34 bzw. der Verdrehsicherung 44 fest verbunden. Der Ventilkörper 37 weist zumindest zwei Durchtrittsöffnungen 48, 49 auf. Im Ausführungsbeispiel ist eine erste Durchtrittsöffnung 48 am stirnseitigen Ende des rohrförmigen Ventilkörpers 37 vorgesehen. Die weitere Durchtrittsöffnung 49 ist gegenüberliegend vorgesehen und in radialer Richtung ausgerichtet und in der Umfangswand vorgesehen. Die zweite Durchtrittsöffnung 49 ist beispielsweise durch runde Ausnehmungen gebildet. Es können ein oder mehrere Ausnehmungen über den Umfang verteilt an dem rohrförmigen Ventilkörper 37 vorgesehen sein, welche die Durchtrittsöffnung 49 bilden. Die Durchtrittsöffnungen 48, 49 können beispielsweise als kreisrunde Öffnungen ausgebildet sein. Auch können diese mehreckförmig oder rechteckförmig ausgebildet sein. Zudem kann die zumindest eine Durchtrittsöffnung 48, 49 eine tropfenförmige Kontur aufweisen oder einen Anströmabschnitt aufweisen, sodass mit zunehmender Hubbewegung ein sich ändernder, insbesondere ein abnehmender oder ein zunehmender Volumenstrom des Mediums zum Ausströmen oder Einströmen in den Ventilkörper 37 freigegeben wird bzw. angesteuert werden kann.

An dem Ventilgehäuse 25 ist dem Antrieb 27 gegenüberliegend eine erste Ventilkammerhülse 51 angeordnet. Diese erste Ventilkammerhülse 51 ist rohrförmig ausgebildet und umgibt den Ventilkörper 37. Die erste Ventilkammerhülse 51 ist vorzugsweise lösbar an dem Ventilgehäuse 25 befestigt. Zwischen dem Ventilgehäuse 25 und der ersten Ventilkammerhülse 51 ist eine erste Dichtung 52 vorgesehen. Diese erste Dichtung 52 weist beispielsweise einen unmittelbar am Außenumfang des Ventilkörpers 37 anliegenden Dichtring 53 auf. Dieser Dichtring 53 kann beispielsweise aus PTFE bestehen. Der Dichtring 53 kann von einer Elastomerdichtung 54 umgeben sein.

Durch diese Anordnung kann eine Abdichtung zwischen dem Antrieb 27 und dem Ventilkörper 37 ermöglicht sein, der in die Ventilkörperkammer 36 zumindest teilweise einfahrbar ist. Darüber hinaus kann eine Abdichtung zwischen einer ersten Druckkammer 56, welche vorzugsweise in der Anschlussstelle 16, insbesondere der Einstecköffnung 17 ausgebildet ist, und dem Antrieb 27 geschaffen werden. Gleichzeitig ist durch die lösbare Anbindung der ersten Ventilkammerhülse 51 an das Ventilgehäuse 25 eine einfache Fixierung der ersten Dichtung 52 möglich. Die erste Dichtung 52 ist bevorzugt als eine radial umlaufende Dichtung ausgebildet, welche am Außenumfang des rohrförmigen Ventilkörpers 37 angreift.

Bei dieser Ausführungsform gemäß Figur 1 ist der Ventilkörper 37 frei hervorstehend gegenüber der ersten Ventilkammerhülse 51 angeordnet. Das Mehrwegeventil 11 mit dem Antrieb 27, der ersten Ventilkammerhülse 51 und dem vorstehenden Ventilkörper 37 wird als Einbaueinheit in die Anschlussstelle 16 eingesetzt. In der Anschlussstelle 16 ist die erste Druckkammer 56 beispielsweise dem zweiten Auslass 15 zugeordnet. Benachbart zur ersten Druckkammer 56 ist eine zweite Druckkammer 57 vorgesehen. Diese zweite Druckkammer 57 ist beispielsweise dem ersten Auslass 14 zugeordnet. Diese zweite Druckkammer 57 ist bevorzugt zwischen der ersten Druckkammer 56 bzw. dem zweiten Auslass 15 und dem Einlass 12 positioniert. Zwischen der ersten und zweiten Druckkammer 56, 57 ist bevorzugt eine zweite Dichtung 58 vorgesehen. Diese zweite Dichtung 58 ist bevorzugt getrennt zum Mehrwegeventil 11 in die Einsetzöffnung 17 eingesetzt und beispielsweise mit einem Befestigungselement 61, insbesondere Schraubring, in der Anschlussstelle 16 fixiert. Dadurch wird die erste Druckkammer 56 gegenüber der zweiten Druckkammer 57 abgedichtet.

Des Weiteren wird in die Einstecköffnung 17 eine dritte Dichtung 62 eingebracht. Diese dritte Dichtung 62 kann in Analogie zur zweiten Dichtung 58 in der Einsetzöffnung 17 durch das Befestigungselement 61 fixiert sein. Durch diese dritte Dichtung 62 wird die zweite Druckkammer 57 gegenüber dem Einlass 12 und dem ersten Auslass 14 abgedichtet.

Zum Positionieren des Mehrwegeventils 11 in der Einsetzöffnung 17 der Anschlussstelle 16 ist der Ventilkörper 37 bevorzugt in die erste Endposition 39 verfahren. Diese erste Endposition 39 bedeutet, dass der Ventilkörper 37 in eine maximale Hubposition durch den Antrieb 27 relativ zum Ventilgehäuse 25 verfahren ist. Der Ventilkörper 37 wird zunächst in die zweite Dichtung 58 und anschließend in die dritte Dichtung 62 eingeführt. Darauffolgend wird der Antrieb 27 durch eine vorzugsweise lösbare Schraubverbindung mit der Anschlussstelle 16 fest verbunden. Beispielsweise ist an dieser Schnittstelle eine axiale Dichtung 64 vorgesehen.

Das Mehrwegeventil 11 ist mit dem Ventilkörper 37 in der ersten Endposition 39 in der Anschlussstelle 16 in einer ersten Schaltposition dargestellt. In dieser ersten Schaltposition ist der Einlass 12 mit der ersten Durchtrittsöffnung 48 und die zweite Durchtrittsöffnung 49 mit dem zweiten Auslass 15 verbunden, sodass der Volumenstrom des Mediums vollständig von dem Einlass 12 in den zweiten Auslass 15 übergeführt wird. Der rohrförmige Ventilkörper 37 erstreckt sich vollständig zwischen der zweiten Dichtung 58 und der dritten Dichtung 62, sodass der erste Auslass 14 gesperrt ist.

Bei dieser Ausführungsform des Mehrwegeventils 11 ist vorgesehen, dass die Länge des Ventilkörpers 37 derart ausgelegt ist, sodass bei einer Positionierung des Ventilkörpers 37 in der ersten Endposition 39 des Ventilkörpers 37 sich von der ersten Dichtung 52 entlang der zweiten Dichtung 58 bis in die dritte Dichtung 62 erstreckt. Dadurch ist der Ventilkörper 37 in der ersten Dichtung 52, der zweiten Dichtung 58 und der dritten Dichtung 62 geführt

Unter der ersten Dichtung 52 wird diejenige Dichtung verstanden, welche zwischen der ersten Druckkammer und dem Ventilgehäuse angeordnet ist.

Und der zweiten Dichtung 58 wird diejenige Dichtung verstanden, welche die zwischen der ersten Druckkammer und der zweiten Druckkammer angeordnet ist bzw. die erste Druckkammer von der zweiten Druckkammer trennt.

Unter der dritten Dichtung 62 wird diejenige Dichtung verstanden, welche zwischen dem Einlass und einer nachfolgenden Druckkammer positioniert ist.

Aufgrund dieser Anordnung des Mehrwegeventils 11 gemäß Figur 1 ist auch ermöglicht, dass der an dem Einlass 12 anliegende Druck des Mediums über den Druck-Bypass 46 in der Ventilkörperkammer 36 anliegen kann. Ausgehend hiervon ist eine verringerte Stellkraft des Antriebes 27 erforderlich, um den Ventilkörper 37 aus einer ersten Endposition 39 gemäß Figur 1 in die zweite Endposition 41 gemäß Figur 2 überzuführen.

In dieser zweiten Endposition 41 ist ein freies stirnseitiges Ende des Ventilkörpers 37 aus der dritten Dichtung 62 herausgeführt. Das stirnseitige Ende des Ventilkörpers 37 ist innerhalb der zweiten Druckkammer 57 angeordnet. Von dort aus erstreckt sich der rohrförmige Ventilkörper 37 durchgehend bis zur ersten Dichtung 52. Dadurch ist der zweite Auslass 15 gesperrt. Ein freier Durchgang ist zwischen dem Einlass 12 und dem ersten Auslass 14 gebildet. Eine Strömung des Mediums von der zweiten Druckkammer 57 in die erste Druckkammer 56 ist aufgrund der zweiten Dichtung 58 verhindert.

Der Ventilkörper 37 weist bevorzugt an seinem stirnseitigen Ende eine Einführschräge auf, sodass das stirnseitige Ende des Ventilkörpers 37 gesichert in die dritte Dichtung 62 wieder eingeführt werden kann.

In Figur 3 ist eine weitere schematische Schnittansicht des Mehrwegeventils 11 gemäß Figur 1 dargestellt, wobei der Ventilkörper 37 in der Zwischenposition 42 angeordnet ist. Bei dieser Zwischenposition 42 ist vorgesehen, dass der Einlass 12 sowohl den ersten Auslass 14 als auch den zweiten Auslass 15 mit dem Medium versorgen. Beispielsweise ist vorgesehen, dass das stirnseitige Ende des Ventilkörpers 37 wiederum gegenüber der dritten Dichtung 62 abgehoben ist. Gleichzeitig wird jedoch eine Hubposition eingenommen, in der die Durchtrittsöffnung 49 noch innerhalb der ersten Druckkammer 56 positioniert ist, sodass ein Volumenstrom in den zweiten Auslass 15 strömen kann.

In Abhängigkeit der Anordnung der Durchtrittsöffnung 48, welche der ersten Druckkammer 56 zugeordnet ist, als auch einem stirnseitigen Ende des Ventilkörpers 37, können die Volumenströme für den ersten Auslass 14 und/oder den zweiten Auslass 15 angesteuert und prozentual aufgeteilt werden.

Bei dieser Ausführungsform kann das Mehrwegeventil 11 als eine Baugruppe ausgebildet sein, welches zusätzlich die zweite Dichtung 58 und die dritte Dichtung 62 umfasst, die jeweils separat in die Anschlussstelle 16 eingesetzt und fixiert werden können. Ergänzend können noch Befestigungselemente 61 für die Dichtungen 58, 62 umfasst sein.

Gemäß einer alternativen, nicht näher dargestellten Ausführungsform zu dem Mehrwegeventil 11 gemäß den Figuren 1 bis 3 kann vorgesehen sein, dass beispielsweise die zweite Dichtung 58 und die dritte Dichtung 62 eine zweite Ventilkammerhülse 66 bilden. Diese zweite Ventilkammerhülse 66 ist in die zweite Druckkammer 57 einsetzbar und umfasst am jeweiligen Ende die zweite Dichtung 58 und dritte Dichtung 62. Diese zweite Ventilkammerhülse 66 ist getrennt von dem Mehrwegeventil 11 in die Anschlussstelle 16 einsetzbar und darin fixierbar. Bevorzugt umfasst die zweite Ventilkammerhülse 66 jeweils außenliegend zur zweiten Dichtung 58 und dritten Dichtung 62 jeweils eine Abdichtung 67 die zur Einstecköffnung 17 ausgerichtet ist.

Gemäß einer weiteren nicht näher dargestellten Ausführungsform zu dem Mehrwegeventil 11 gemäß den Figuren 1 bis 3 kann vorgesehen sein, dass die erste Ventilkammerhülse 51 sich entlang der ersten Druckkammer 56 erstreckt. In diesem Fall ist an der ersten Ventilkammerhülse 51 die erste Dichtung 52 als auch die zweite Dichtung 58 fixiert. Die dritte Dichtung 62 kann separat dazu in die Anschlussstelle 16 eingesetzt und durch das Befestigungselement 61 lösbar fixiert werden.

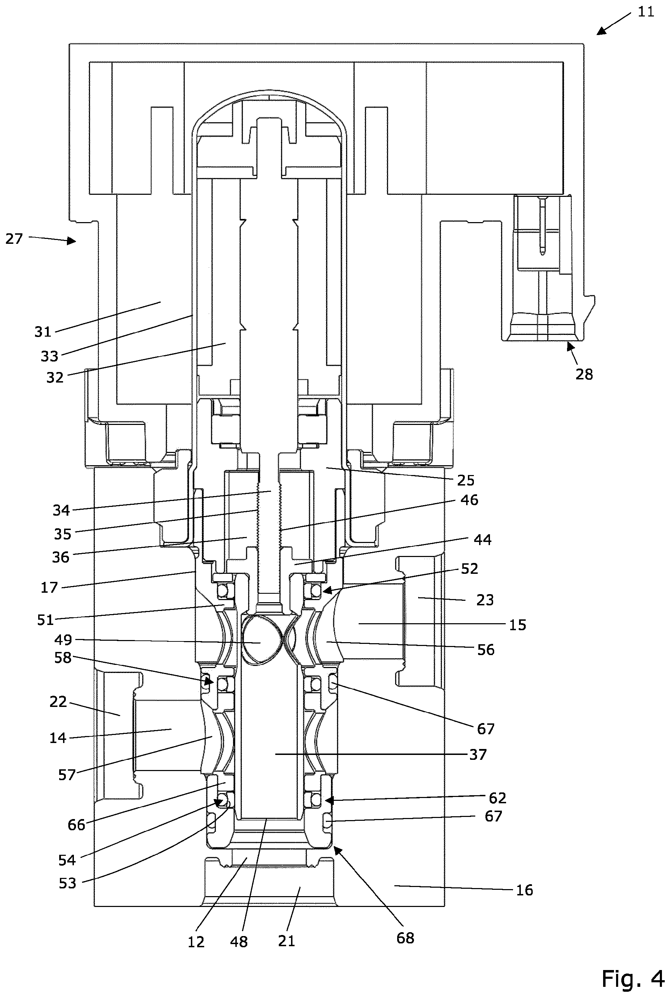

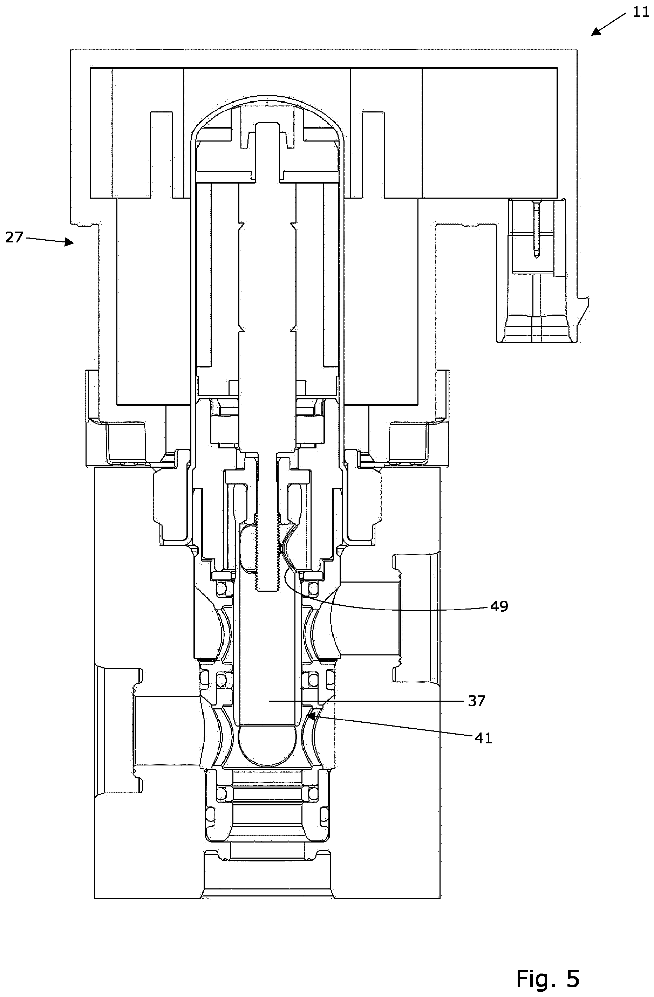

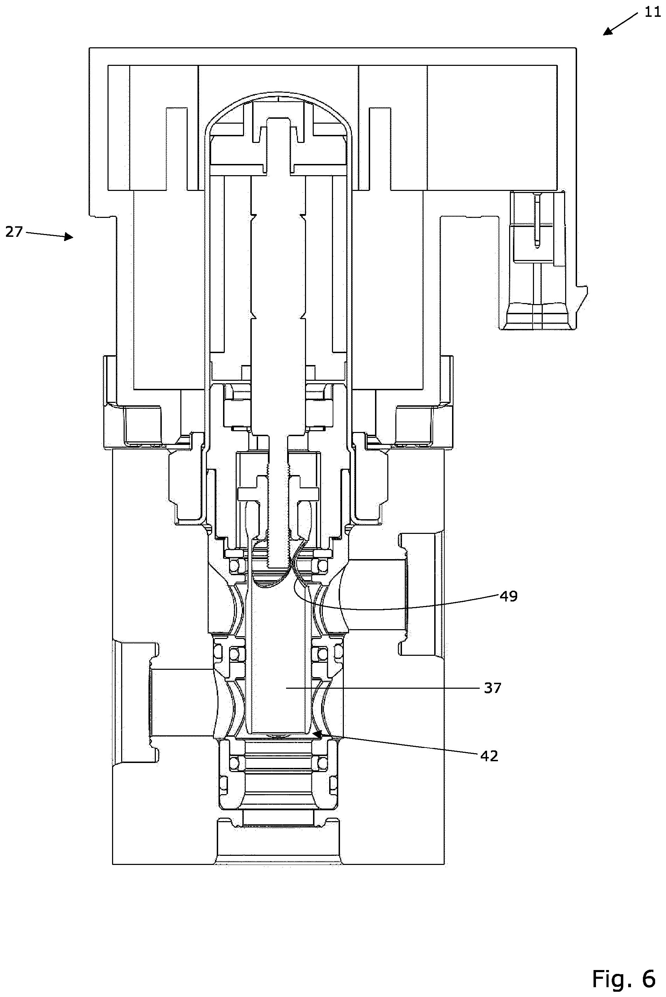

In den Figuren 4 bis 6 ist eine alternative Ausführungsform des Mehrwegeventils 11 zu den vorbeschriebenen Ausführungsformen dargestellt. Bei dieser Ausführungsform des Mehrwegeventils 11 ist vorgesehen, dass die erste Ventilkammerhülse 51 und die zweite Ventilkammerhülse 66 miteinander verbunden sind und die erste Ventilkammerhülse 51 an dem Ventilgehäuse 25 befestigt ist. Bei dieser Ausführungsform ist bevorzugt vorgesehen, dass die zweite Dichtung 58 in der Schnittstelle zwischen der ersten Ventilkammerhülse 51 und der zweiten Ventilkammerhülse 66 positioniert und fixiert ist. Gleichzeitig ist in der Schnittstelle zwischen der ersten und zweiten Ventilkammerhülse 51, 66 eine Abdichtung 67 am Außenumfang der Schnittstelle vorgesehen. Diese Abdichtung 67 ist an der ersten Ventilkammerhülse 51 oder der zweiten Ventilkammerhülse 66, vorzugsweise in einer umlaufenden Nut, aufgenommen, je nachdem, ob die erste Ventilkammerhülse 51 die zweite Ventilkammerhülse 66 außen umgibt oder umgekehrt. Am freien stirnseitigen Ende der zweiten Ventilkammerhülse 66 ist ebenfalls außen umlaufend eine Abdichtung 67 vorgesehen.

Das Mehrwegeventil 11 umfasst somit den Antrieb 27, das Ventilgehäuse 25, den Ventilkörper 37 sowie ein Cartridgegehäuse 68, welches sich zumindest aus der ersten Ventilkammerhülse 51 und der zweite Ventilkammerhülse 66 zusammensetzt, wobei zwischen der ersten und zweiten Ventilkammerhülse 51, 66 die zweite Dichtung 58 und am stirnseitigen Ende der zweiten Ventilkammerhülse 66 die dritte Dichtung 62 angeordnet ist. Somit ist das Mehrwegeventil 11 mit dem Cartridgegehäuse 68 als eine Baueinheit in die Einsetzöffnung 17 der Anschlussstelle 16 einsetzbar.

Im Übrigen kann auf die Funktionsweise des Mehrwegeventils 11 auf die Ausführungen zu den Figuren 1 bis 3 Bezug genommen werden.

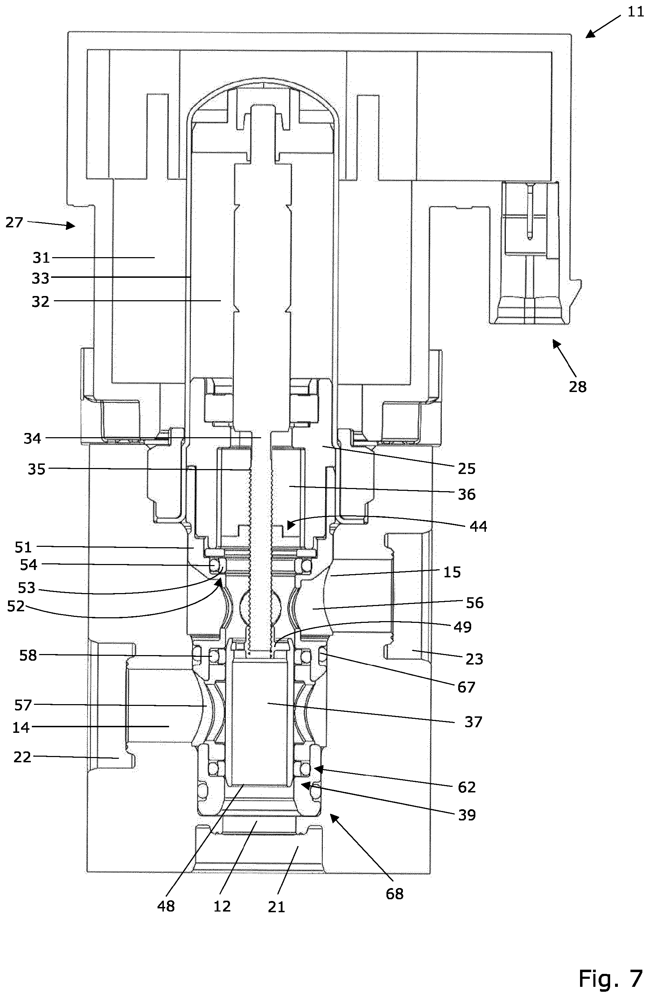

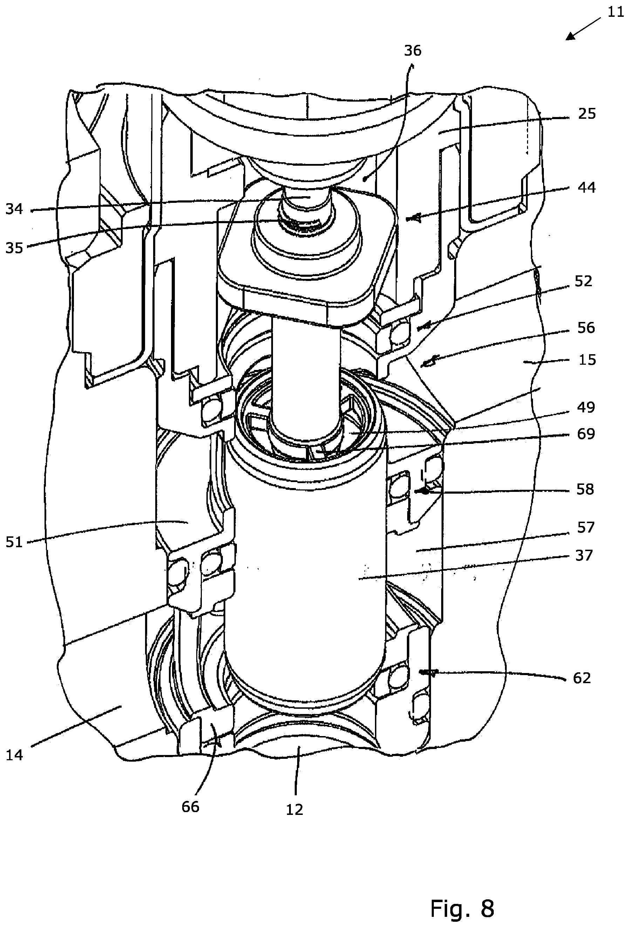

In Figur 7 ist eine schematische Ansicht einer weiteren alternativen Ausführungsform des Mehrwegeventils 11 zu den vorstehenden Ausführungsformen dargestellt. Diese Ausführungsform weicht in der Ausgestaltung des Ventilkörpers 37 von den vorstehend beschriebenen Ausführungsformen ab. Bei dieser Ausführungsform ist vorgesehen, dass der Ventilkörper 37 gegenüber vorstehenden Ausführungsformen noch weiter verkürzt werden kann. Dies beruht darauf, dass die Durchtrittsöffnungen 49, welche bei den vorstehenden Ausführungsformen radial in der Umfangswand des Ventilkörpers 37 vorgesehen sind, entfallen. Bei diesem Ventilkörper 37 ist vorgesehen, dass an einem stirnseitigen Ende, an welchem der Ventilkörper 37 mit dem Stellelement 34 verbunden ist, die zumindest eine Durchtrittsöffnung 49 ausgebildet ist. Diese Durchtrittsöffnung 49 ist beispielsweise sternförmig ausgebildet, wie dies in der perspektivischen Ansicht aus Figur 8 hervorgeht. Beispielsweise können zumindest ein Steg 69 zumindest eine Rippe, vorzugsweise zwei oder drei Stege oder Rippen, vorgesehen sein, zwischen denen sich die zumindest eine Durchtrittsöffnung 49 bzw. die Durchtrittsöffnungen 49 erstrecken. Die Umfangswand des Ventilkörpers 37 ist somit vollständig geschlossen.

Aus der Ansicht gemäß Figur 7 geht die verkürzte Länge des Ventilkörpers 37 hervor. Zum einen ist ein stirnseitiges Ende des Ventilkörpers 37, in welchen die Durchtrittsöffnung 48 vorgesehen ist, in der dritten Dichtung 62 positioniert. Das gegenüberliegende Ende des Ventilkörpers 37 kann zwischen der ersten und zweiten Druckkammer 56, 57 enden. Durch die stirnseitige Durchtrittsöffnung 49,, welche in Richtung auf den Antrieb 27 weist, kann das Medium ausgehend von dem Einlass 12 direkt die 1. Druckkammer 56 und anschließend in den zweiten Auslass 15 gelangen.

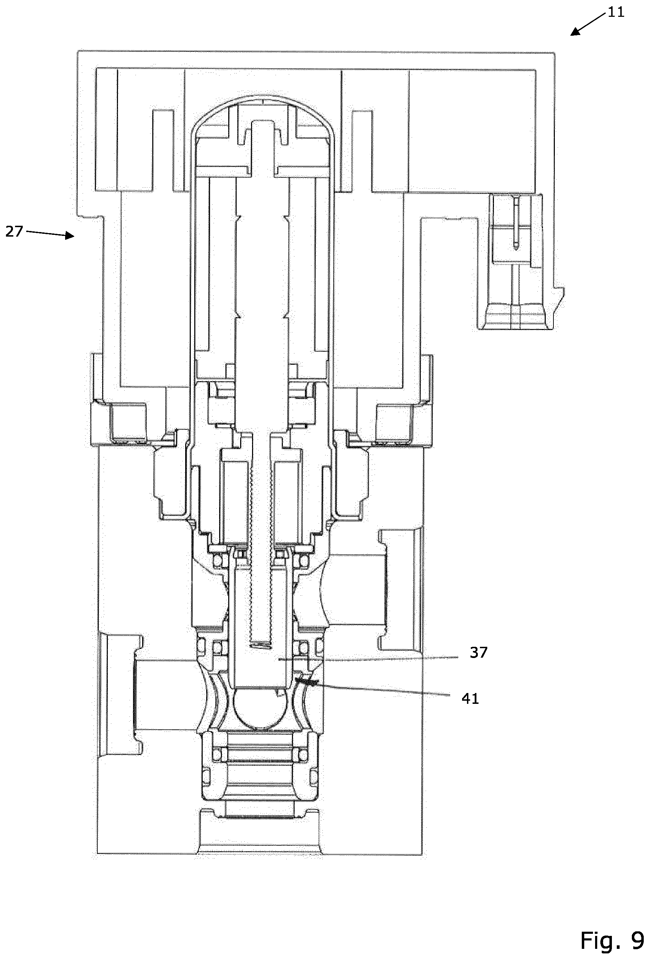

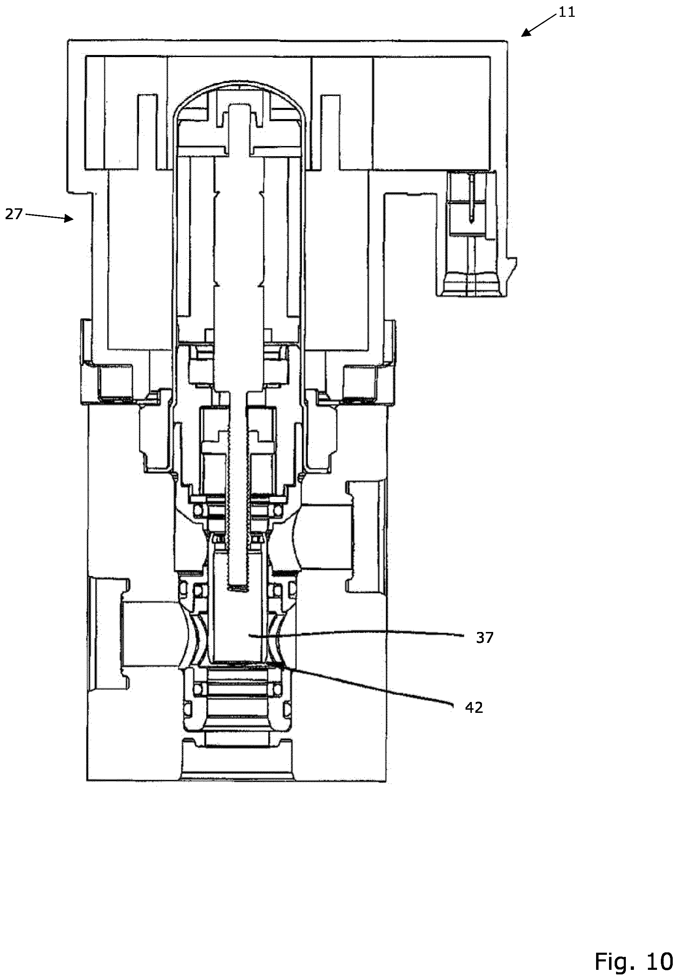

In Figur 9 ist eine schematische Schnittansicht des Mehrwegeventils 11 gemäß Figur 7 in der zweiten Endposition 41 des Ventilkörpers 37 dargestellt. Die Figur 10 zeigt eine schematische Schnittansicht des Mehrwegeventils 11 gemäß Figur 7, bei welcher der Ventilkörpers 37 in der Zwischenposition 42 angeordnet ist.

Die vorstehende Ausgestaltung des Ventilkörpers 37 mit den beiden einander gegenüberliegenden stirnseitigen Durchtrittsöffnungen 48, 49 kann auch bei den vorbeschriebenen Ausführungsformen zum Einsatz kommen.

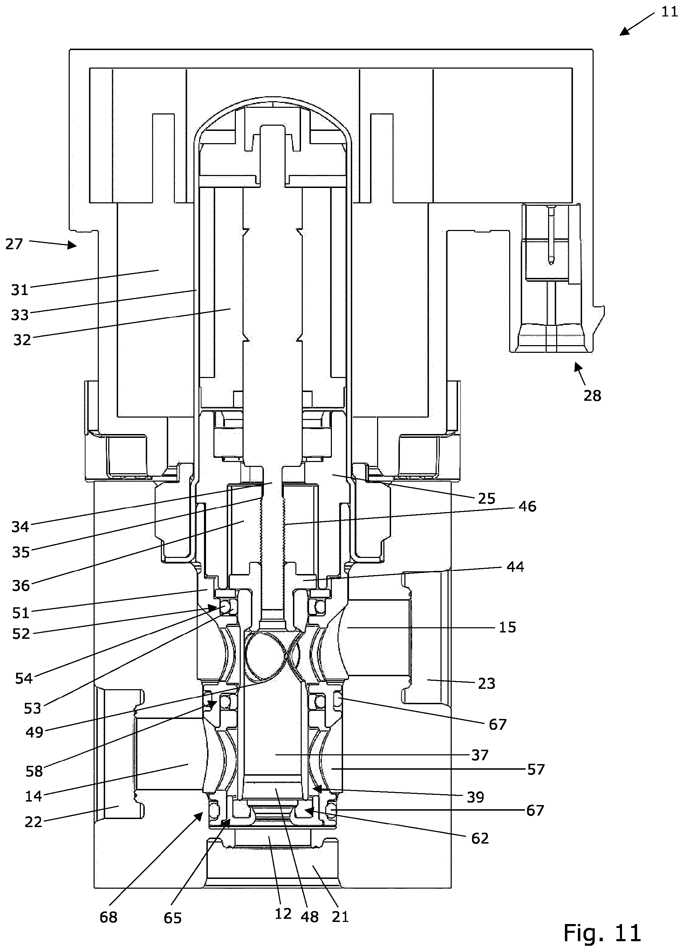

In Figur 11 ist eine schematische Schnittansicht einer weiteren alternativen Ausführungsform des Mehrwegeventils 11 zu den vorstehenden Ausführungen gemäß den Figuren 1 bis 10 dargestellt. Dieses Mehrwegeventil 11 weicht in der Ausgestaltung der dritte Dichtung 62 von der Ausführungsform gemäß den Figuren 4 bis 6 ab. In den Figuren 1 bis 10 ist die dritte Dichtung 62 als eine radiale Dichtung ausgebildet. Bei dem Mehrwegeventil 11 gemäß Figur 11 ist die dritte Dichtung 62 als eine axiale Dichtung ausgebildet. Dabei ist vorgesehen, dass diese Dichtung 62 in Richtung auf eine Stirnseite des Ventilkörpers 37 weist. Beim Überführen des Ventilkörpers 37 durch eine Hubbewegung in die erste Endposition 39 kommt eine stirnseitige Ringfläche des Ventilkörpers 37 zur abdichtenden Anlage auf der axialen Dichtung 62. Diese axiale Dichtung 62 kann in einem Aufnahmering 65 angeordnet sein und beispielsweise durch eine Umbördelung in dem Aufnahmering 65 gesichert gehalten werden. Dieser Aufnahmering 65 kann in die zweite Ventilkammerhülse 66 eingesetzt, eingepresst oder integriert sein. Diese dritte Dichtung 62 kann von einer außen umlaufenden Abdichtung 67 umgeben sein. Bei dieser Ausführungsform des Mehrwegeventils11 ist vorgesehen, dass bei einer Hubbewegung zwischen der ersten Endposition 39 und der zweiten Endposition 41 der Ventilkörper 37 durch die radiale erste Dichtung 52 sowie durch die radiale zweite Dichtung 58 geführt ist und in der ersten Endposition 39 abdichtend auf der dritten Dichtung 62, welche als axiale Dichtung ausgebildet ist, aufliegt.

In Bezug auf die weiteren Ausgestaltungen und Ausführungsformen des Mehrwegeventils 11 in Figur 11 kann auf die Figuren 1 bis 10 Bezug genommen werden.

Diese dritte Dichtung 62, welche als eine axial ausgerichtete Dichtung ausgebildet ist, kann ebenso bei der Ausführung des Mehrwegeventils 11 gemäß den Figuren 1 bis 3 als auch der dazu beschriebenen alternativen Ausführungsformen eingesetzt werden.

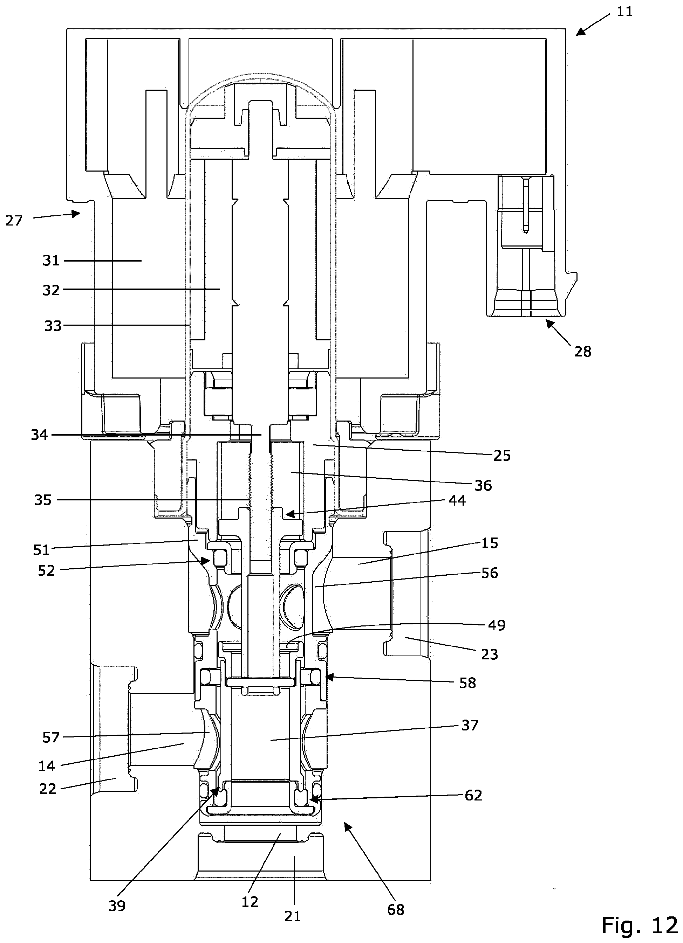

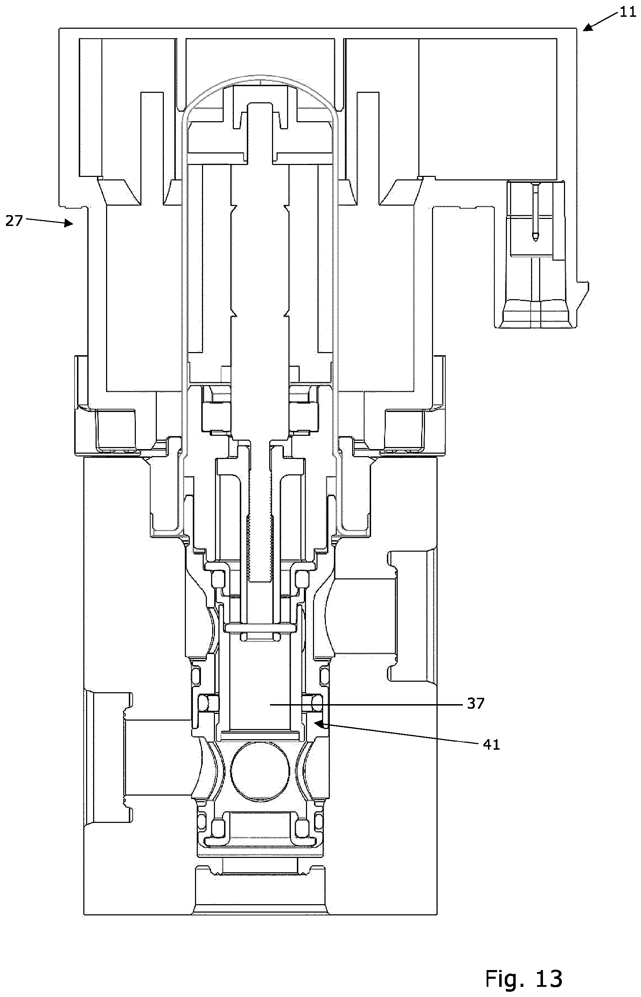

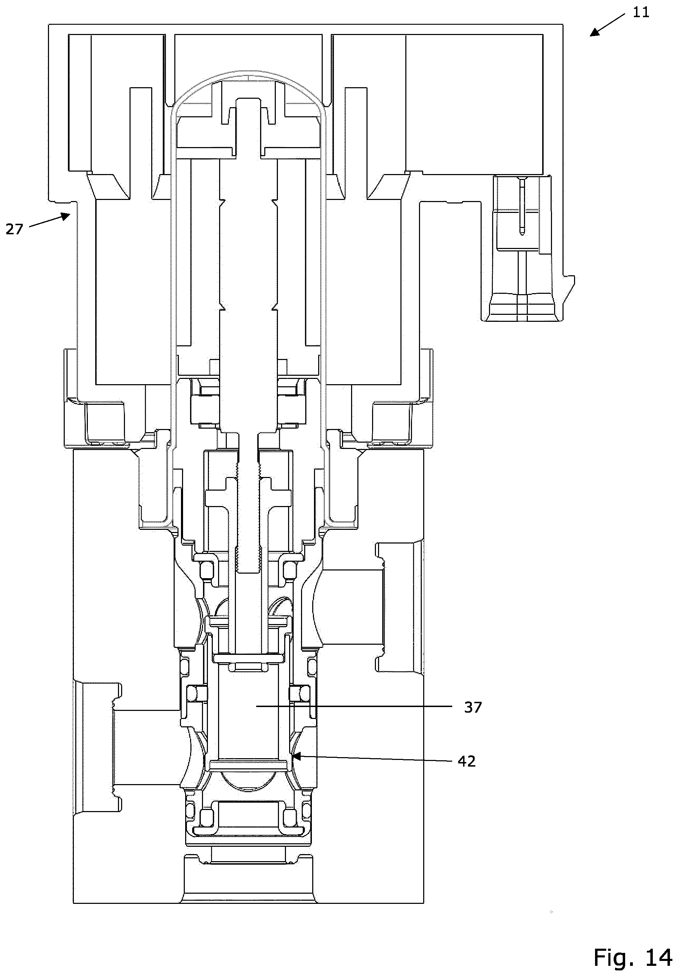

In den Figuren 12 bis 14 ist eine weitere alternative Ausführungsform des Mehrwegeventils 11 dargestellt. Die Figur 12 zeigt das Mehrwegeventil 11 in einer ersten Endposition 39. Die Figur 13 zeigt das Mehrwegeventil 11 gemäß Figur 12 in einer zweiten Endposition 41 und die Figur 14 zeigt das Mehrwegeventil 11 gemäß Figur 12 in einer Zwischenposition 42. Bei dieser Ausführungsform ist vorgesehen, dass der rohrförmige Ventilkörper 37 der Ausführungsform gemäß den Figuren 7 bis 10 entspricht. Auch der weitere Aufbau dieser Ausführungsform entspricht der Ausführungsform gemäß den Figuren 7 bis 10. Abweichend bei der vorliegenden Ausführungsform gemäß den Figuren 12 bis 14 ist vorgesehen, dass die erste Dichtung 52 und die dritte Dichtung 62 jeweils als eine axiale Dichtung ausgebildet sind. Dies bedeutet, dass eine Stirnseite des Ventilkörpers 37 sowohl in der ersten Endposition 39 als auch in der zweiten Endposition 41 an der ersten Dichtung 52 bzw. dritten Dichtung 62 abdichtend anliegt. Dazwischenliegend ist die zweite Dichtung 58 als eine radiale Dichtung ausgebildet, wodurch der Ventilkörper 37 während der Verfahrbewegung zwischen der ersten Endposition 39 und der zweiten Endposition 41 verschiebbar geführt ist. Alternativ zu dieser Ausführungsform kann auch vorgesehen sein, dass die erste Dichtung 52 als eine radiale Dichtung und nur die dritte Dichtung 62 als eine axiale Dichtung ausgebildet ist. Auch kann eine vertauschte Anordnung vorgesehen sein.

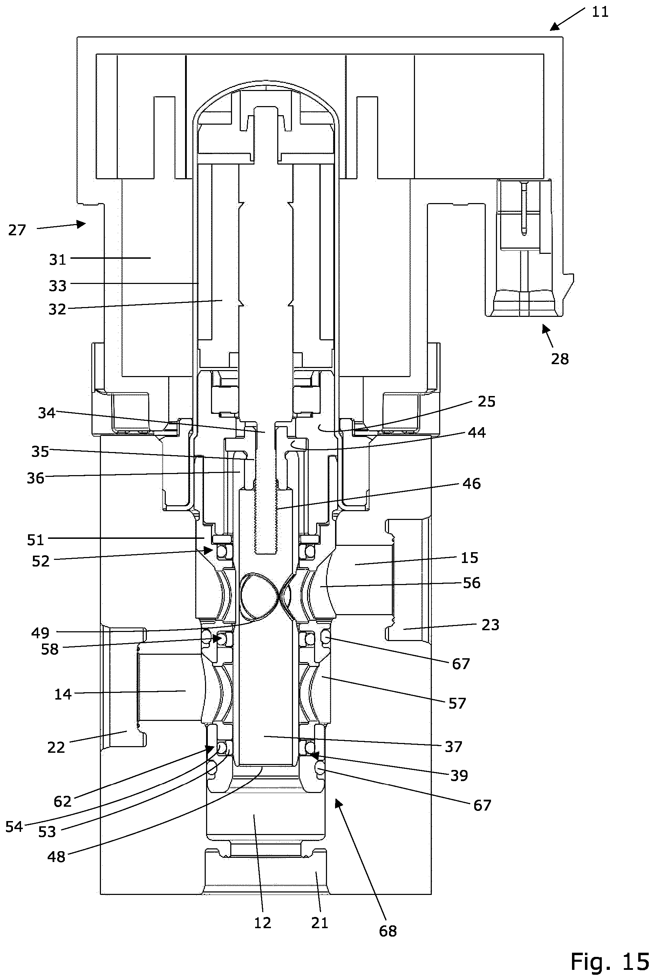

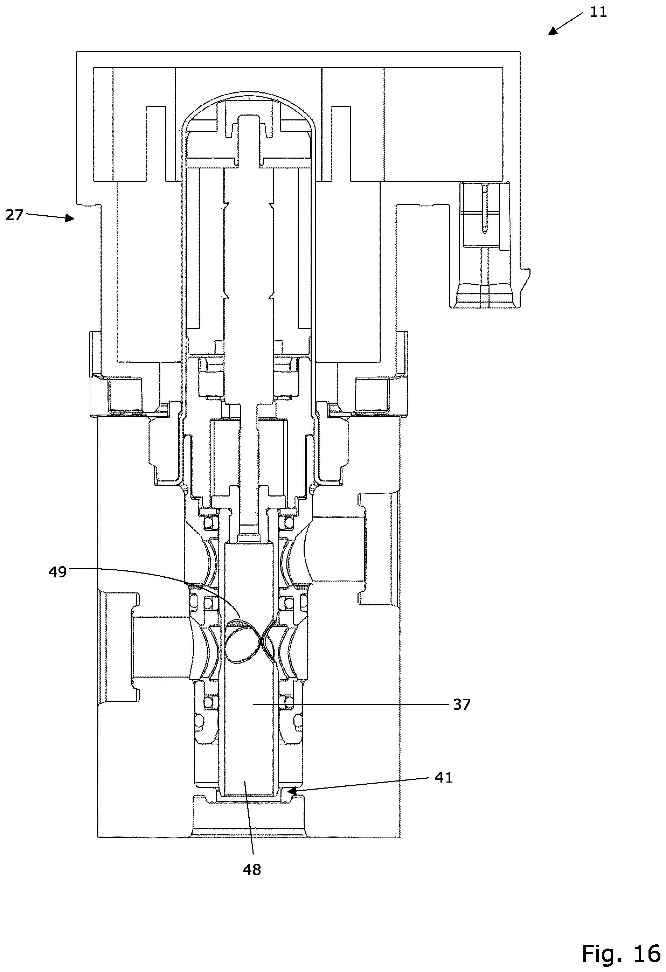

In den Figuren 15 bis 17 ist eine alternative Ausführungsform des Mehrwegeventils 11 zu den vorstehend beschriebenen Ausführungsformen dargestellt. Bei dieser Ausführungsform des Mehrwegeventils 11 ist vorgesehen, dass der rohrförmige Ventilkörper 37 eine längere Erstreckung umfasst, als dies bei den vorbeschriebenen Ausführungsformen der Fall ist. In Figur 15 ist der Ventilkörper 37 in Analogie zu Figur 4 in der ersten Endposition 39 positioniert. Dadurch strömt das Medium von dem Einlass 12 durch den Ventilkörper 37 hindurch und tritt über die Durchtrittsöffnung 49 in den zweiten Auslass 15 aus. Die Figur 16 zeigt das Mehrwegeventil 11 mit dem Ventilkörper 37 in der zweiten Endposition 41. In dieser zweiten Endposition 41 ist der Einlass 12 mit dem ersten Auslass 14 verbunden. Das Ausströmen von dem Medium in den zweiten Auslass 15 ist gesperrt.

Bei dieser Ausführungsform ist vorgesehen, dass aufgrund der größeren Länge des Ventilkörpers 37 während einer Hubbewegung des Ventilkörpers 37 von der ersten Endposition 39 in die zweite Endposition 41 in der ersten bis dritten Dichtung 52, 58, 62 geführt ist. Somit kommt der Ventilkörper 37 gegenüber der dritten Dichtung 62 nicht frei. Diese längere Ausführung des Ventilkörpers 37 kann auch bei den vorbeschriebenen Alternativen und nicht näher dargestellten Ausführungsformen vorgesehen sein.

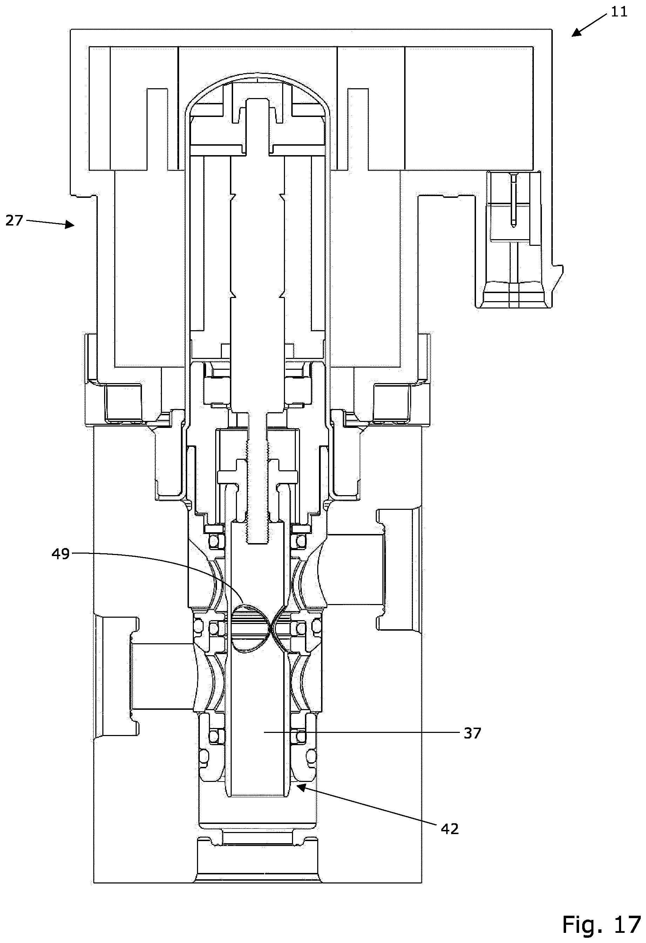

In Figur 17 ist das Mehrwegeventil 11 gemäß den Figuren 15 und 16 mit dem Ventilkörper 37 in der Zwischenposition 42 dargestellt. Der Volumenstrom des Mediums, der über den Einlass 12 in die Durchtrittsöffnung 48 des Ventilkörpers 37 gelangt, kann so über die weitere Durchtrittsöffnung 49 in die erste und zweite Druckkammer 56, 57 abströmen.

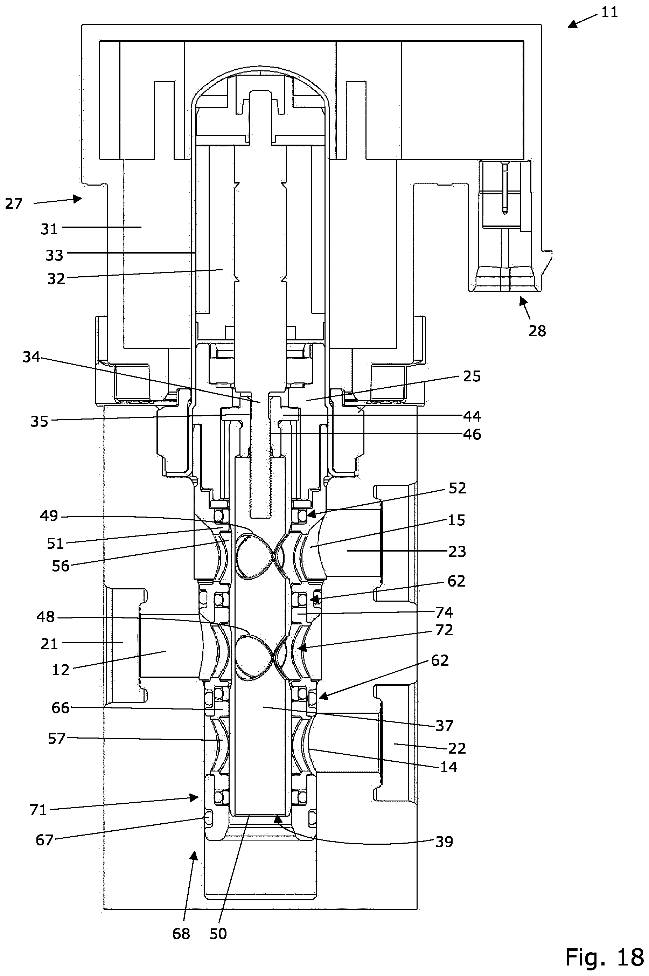

In den Figuren 18 bis 20 ist eine weitere alternative Ausführungsform des Mehrwegeventils 11 dargestellt. Dieses Mehrwegeventil 11 ist in Bezug auf den Ventilkörper 37 darauf angepasst, dass in der Anschlussstelle 16 zumindest ein seitlich angeordneter Einlass 12 als auch des Weiteren seitlich angeordnete Auslässe 14, 15 vorgesehen sind. Bei den vorbeschriebenen Ausführungsformen gemäß den Figuren 1 bis 10, 15 bis 17 ist der Einlass 12 an einer Stirnseite der Anschlussstelle 16 vorgesehen, wohingegen die Auslässe 14, 15 an einer rechtwinklig dazu angeordneten Seitenwand angeordnet sind. Die Anschlüsse 14, 15 können an derselben Seitenwand oder an einander gegenüberliegenden Seitenwänden ebenso wie der Einlass 12 angeordnet sein.

Bei der vorstehenden Ausführungsform gemäß den Figuren 18 bis 20 ist vorgesehen, dass die Auslässe 14, 15 an einer Seitenwand der Anschlussstelle 16 angeordnet sind und an einer weiteren oder gegenüberliegenden Seitenwand, insbesondere nicht an einer Stirnseite der Anschlussstelle 16, der zumindest eine Einlass 12 angeordnet ist. Vorteilhafterweise ist der Einlass 12 zwischen den beiden Auslässen 14, 15 positioniert. Aufgrund dieser Anordnung des Einlasses 12 und den Auslässen 14, 15 umfasst der Ventilkörper 37 beispielsweise drei Durchtrittsöffnungen 48, 49, 50. Bevorzugt sind in der radialen Umfangswand zwei zueinander beabstandete Durchtrittsöffnungen 48, 49 vorgesehen. Diese beiden Durchtrittsöffnungen 48, 49 sind in einem Abstand zueinander angeordnet, der einem Abstand in Hubrichtung des Ventilkörpers 37 gesehen zwischen dem Einlass 12 und dem ersten Auslass 14 entspricht. Vorteilhafterweise ist der Abstand des Einlasses 12 zu dem zweiten Auslass 15 identisch zu dem Abstand in Hubrichtung gesehen zwischen dem Einlass 12 und dem ersten Auslass 14.

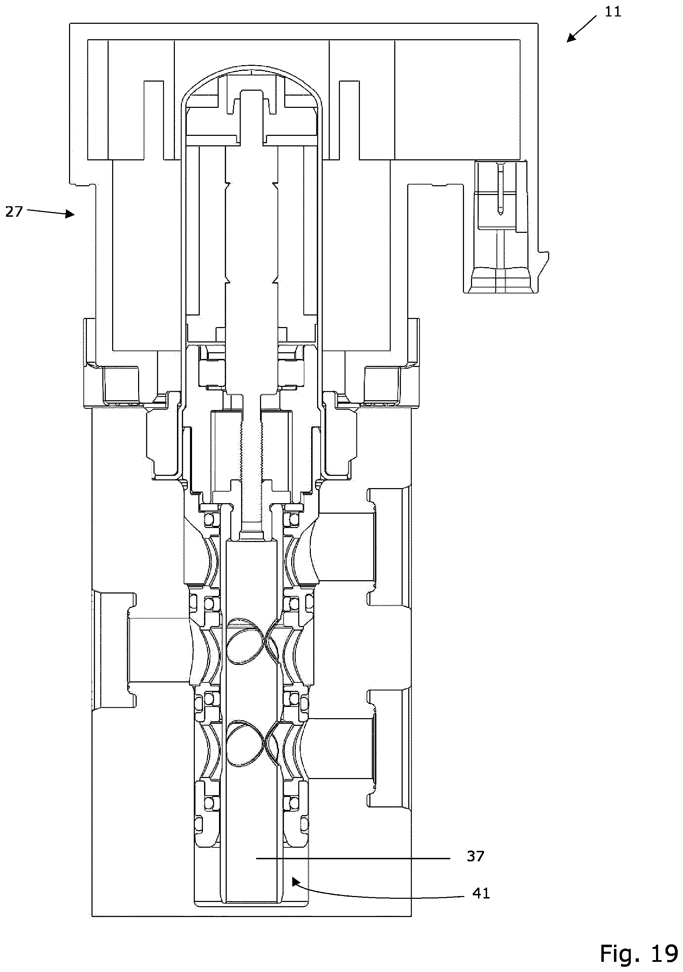

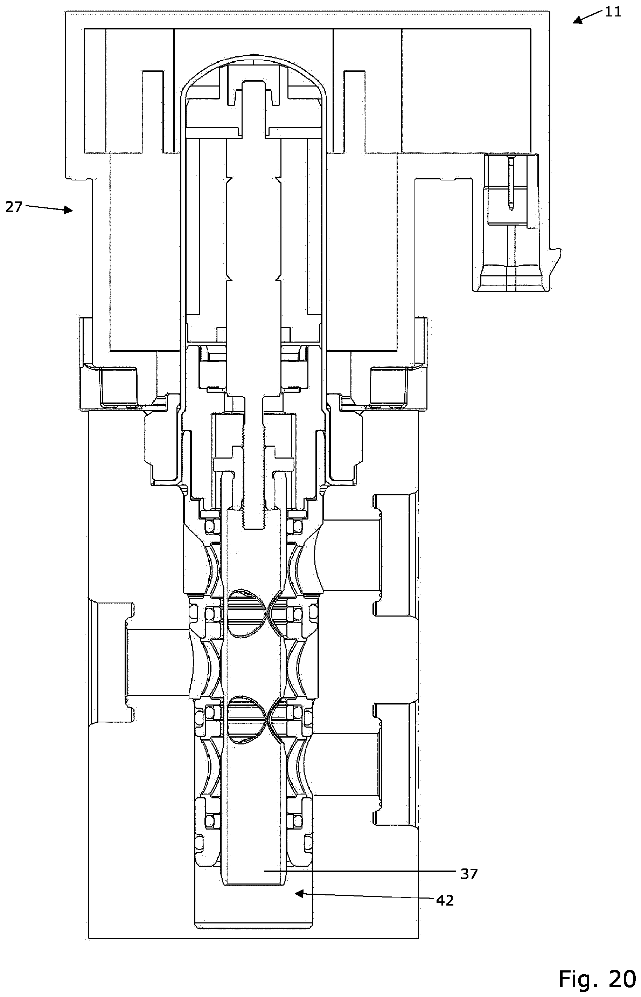

Der Ventilkörper 37 ist in der Länge derart ausgebildet, dass dieser aus einer ersten Endposition 39 gemäß Figur 18 in eine zweite Endposition 41 gemäß Figur 19 verfahrbar ist. In der ersten Endposition 39 gemäß Figur 18 wird der Einlass 12 mit dem ersten Auslass 14 verbunden und der zweite Auslass 15 ist gesperrt. In der zweiten Endposition 41 des Ventilkörpers 37 gemäß Figur 19 ist der erste Auslass 14 gesperrt und der zweite Auslass 15 mit dem Einlass 12 verbunden. Die Figur 20 zeigt den Ventilkörper 37 in der einen Zwischenposition 42, sodass beide Auslässe 14, 15 mit dem in den Einlass 12 einströmenden Medium versorgt werden können.

Bei dieser Ausführungsform ist vorgesehen, dass der Ventilkörper 37 dauerhaft durch die erste Dichtung 52, durch zwei dritte Dichtungen 62 und beispielsweise durch eine vierte Dichtung 71 geführt ist.

Unter der vierten Dichtung wird eine weitere Dichtung verstanden, welche zusätzliche einer Druckkammer zur einseitigen Abdichtung der Druckkammer vorgesehen ist. Bei dieser Ausführungsform des Mehrwegeventils 11 ist vorgesehen, dass die erste Dichtung 52 die erste Druckkammer 56 zum Ventilgehäuse 25 abdichtet. Die dritte Dichtung 62 dichtet die erste Druckkammer 56 zu dem Einlass 12 ab. Die weitere dritte Dichtung 62 dichtet wiederum den Einlass 12 zu der zweiten Druckkammer 57 ab. Bevorzugt ist bei dieser Ausführungsform noch die vierte Dichtung 71 vorgesehen. Diese vierte Dichtung 71 kann zusätzlich zur Abdichtung und/oder Führung des Ventilkörpers 37, der beispielsweise durch die stirnseitige Durchtrittsöffnung 50 offen ist, eingesetzt werden. Bevorzugt ist bei dieser Ausführungsform zwischen dem Einlass 12 einerseits und dem ersten und zweiten Auslass 14, 15 andererseits eine dritte Druckkammer 72 vorgesehen. Bei der in den Figuren 18 bis 20 dargestellten Ausführungsform ist ein Cartridgegehäuse 68 vorgesehen, welche aus der erste Ventilkammerhülse 51, der zweite Ventilkammerhülse 66 und einer dritten Ventilkammerhülse 74 aufgebaut ist. Die dritte Ventilkammerhülse 74 ist in Analogie zu der zweiten Ventilkammerhülse 66 aufgebaut und schließt sich an die zweite Ventilkammerhülse 66 an.

Alternativ kann vorgesehen sein, dass bei dieser Ausführungsform der Anschlussstelle 16 die zweite bis vierte Dichtung 58, 62 und 71 jeweils separat in die Einsetzöffnung 17 eingesetzt und befestigt werden. Alternativ kann vorgesehen sein, dass die erste und zweite Dichtung 52, 58 von der ersten Ventilkammerhülse 51 aufgenommen sind und die dritte Dichtung 66 und vierte Dichtung 71 in die Anschlussstelle 16 eingesetzt werden. Auch kann vorgesehen sein, dass nur die vierte Dichtung 71 separat in die Anschlussstelle 16 eingesetzt wird und die erste bis dritte Dichtung 52, 58 und 62 an den Ventilkammerhülsen 51, 66 befestigt bzw. aufgenommen sind.

Bei allen vorgesehen stehenden Ausführungsformen des Mehrwegeventils 11 ist auch eine vertauschte Ansteuerung ermöglicht, dahingehend dass die zwei Auslässe als zwei Einlässe angesteuert werden, und der eine Einlass als Auslass dient.

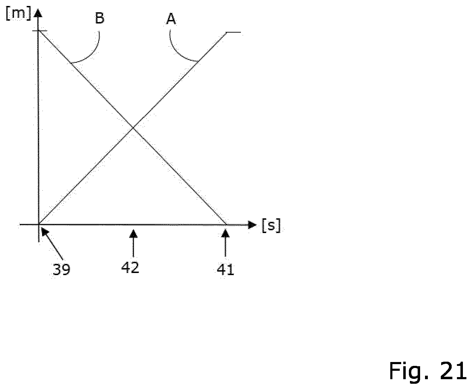

In Figur 21 ist schematisch ein Diagramm dargestellt, in welchem die ansteuerbaren Volumenströme durch das Mehrwegeventil 11 gemäß einer der vorstehenden Ausführungsformen dargestellt ist. In dem Diagramm sind die Volumenströme in Abhängigkeit des Hubweges von dem Ventilkörper 37 dargestellt. Entlang der X-Achse ist der Hubweg des Ventilkörpers 37 zwischen der ersten Endposition 39 in der zweiten Endposition 41 aufgetragen. Die Y-Achse zeigt den Volumenstrom des Mediums in Abhängigkeit der Bewegung des Ventilkörpers 37 des ersten Auslasses 14 (Kennlinie A) und des zweiten Auslasses 15 (Kennlinie B). Das Mehrwegeventil 11 ist derart aufgebaut, dass dieses einen vollständigen Volumenstrom für das Medium in einer Endposition 39 oder 41 freigibt. In der Endposition 39 ist der Volumenstrom zwischen dem Einlass 12 und dem zweiten Auslass 15 vollständig geöffnet und der erste Auslass 14 ist gesperrt. In der zweiten Endposition 41 ist der Volumenstrom zwischen dem Einlass 12 und dem ersten Auslass 14 vollständig geöffnet und der Volumenstrom zwischen dem Einlass 12 von dem zweiten Auslass 15 gesperrt. In der Zwischenposition 42 kann in Abhängigkeit des Hubweges des Ventilkörpers 37 ein Mischbetrieb ermöglicht sein, wobei beispielsweise der eine Volumenstrom kontinuierlich abnimmt und der andere Volumenstrom kontinuierlich zunimmt. Auch kann eine nicht lineare Abnahme bzw. Zunahme oder eine Mischung hiervon angesteuert werden.

## Patentansprüche

1. Mehrwegeventil zur Steuerung eines Mediums, insbesondere in einem Kältemittelkreislauf einer Kältemittelanlage mit einer Wärmepumpenfunktion,
- mit einem Antrieb (27),
- mit einem Ventilkörper (37), dessen Hubbewegung entlang einer Hubachse durch ein Stellelement (34) des Antriebs (27) ansteuerbar ist,
- mit einer zum Antrieb (27) weisenden Ventilkörperkammer (36), in welche der Ventilkörper (37) zumindest teilweise verfahrbar ist,
**dadurch gekennzeichnet,**
- **dass** der Ventilkörper (37) rohrförmig ausgebildet ist und sich entlang der Hubachse erstreckt, und
- **dass** der Ventilkörper (37) in einer Endposition (39, 41) der Hubbewegung zumindest eine erste Druckkammer (56) zwischen einem Einlass (12) und einem Auslass (14, 15) durchquert und in zumindest eine zweite Druckkammer (57) zwischen dem Einlass (12) und zumindest einem weiteren Auslass (15, 14) hineinragt oder diese durchquert, wobei jeder Druckkammer (56, 57) zumindest eine Dichtung (52, 58, 62, 71) zur Anlage an dem Ventilkörper (37) zugeordnet ist.

2. Mehrwegeventil nach Anspruch 1, **dadurch gekennzeichnet, dass** der rohrförmige Ventilkörper (37) zumindest zwei Durchtrittsöffnungen (48, 49, 50) aufweist, wobei eine erste Durchtrittsöffnung (48) einem Einlass (12) zugeordnet ist und die zumindest eine weitere Durchtrittsöffnung (49) dem zumindest einen Auslass (14, 15) zugeordnet ist.

3. Mehrwegeventil nach Anspruch 1 oder 2, **dadurch gekennzeichnet, dass** jeweils einen Anschlag für die Hubbewegung des Ventilkörpers (37) in die erste Endposition (39) und die eine zweite Endposition (41), vorzugsweise in der Ventilkörperkammer (36), vorgesehen ist, und vorzugsweise der Ventilkörper (37) in der ersten Endposition (39) des Ventilkörpers (37) den Einlass (12) und den einen Auslass (14, 15) verbindet und in der zweiten Endposition (41) den Einlass (12) mit dem einen weiteren Auslass (15, 14) verbindet.

4. Mehrwegeventil nach einem der vorhergehenden Ansprüche, **dadurch gekennzeichnet, dass** zumindest eine der Druckkammern (56, 57) zugeordnete Dichtung (52, 58, 62, 71) als eine radiale Dichtung ausgebildet ist, welche an einem Außenumfang des rohrförmigen Ventilkörpers (37) anliegt, oder dass zumindest eine der Druckkammern (56, 57) zugeordnete Dichtung (52, 62, 71) als eine axiale Dichtung ausgebildet ist, an welcher eine Stirnseite des rohrförmigen Ventilkörpers (37) in der einen Endposition (39, 41) abdichtend anliegt, oder dass zumindest eine radiale Dichtung und zumindest eine axiale Dichtung (52, 58, 62, 71) vorgesehen sind, an welcher der rohrförmige Ventilkörper (37) in zumindest einer der Endpositionen (39, 41) abdichtend anliegt.

5. Mehrwegeventil nach einem der vorhergehenden Ansprüche, **dadurch gekennzeichnet, dass** zwischen dem Antrieb (27) und der ersten Druckkammer (56) eine erste Dichtung (52) vorgesehen ist, zwischen der ersten und der zweiten Druckkammer (56, 57) eine zweite Dichtung (58) vorgesehen ist und zwischen dem Einlass (12) und der zweiten Druckkammer (57) eine dritte Dichtung (62) vorgesehen ist.

6. Mehrwegeventil nach Anspruch 5, **dadurch gekennzeichnet, dass** der Ventilkörper (37) eine Länge aufweist, sodass der Ventilkörper (37) in der ersten Endposition (39) in der ersten bis dritten Dichtung (52, 58, 62) geführt ist, und in der zweiten Endposition (41) nur in der ersten und zweiten Dichtung (52, 58) geführt ist oder dass der Ventilkörper (37) eine Länge aufweist, sodass der Ventilkörper (37) in der ersten Endposition (39) in der zweiten und dritten Dichtung (58, 62) geführt und gegenüber der ersten Dichtung (52) abgehoben ist und in der zweiten Endposition (41) nur in der ersten und zweiten Dichtung (52, 58) geführt und gegenüber der dritten Dichtung (62) abgehoben ist, oder dass der Ventilkörper (37) eine Länge aufweist, sodass der Ventilkörper (37) in der ersten und zweiten Endposition (39, 41) durch die zweite Dichtung (58) geführt ist und vorzugsweise die zweite Dichtung (58) als eine radiale Dichtung ausgebildet ist und die erste und die dritte Dichtung (52, 62) als radiale und/oder axiale Dichtung ausgebildet ist, oder dass der rohrförmige Ventilkörper (37) eine Länge aufweist, sodass der Ventilkörper (37) in der ersten Endposition (39) und in der zweiten Endposition (41) in der ersten bis dritten Dichtung (52, 58, 62) geführt ist, wobei eine zusätzliche Durchtrittsöffnung (50) zu der zweiten Durchtrittsöffnung (49) in der Umfangswand und/oder an einer Stirnseite des Ventilkörpers (37) vorgesehen ist.

7. Mehrwegeventil nach einem der Ansprüche 1 bis 5, **dadurch gekennzeichnet, dass** zwischen dem Antrieb (27) und der ersten Druckkammer (56) eine erste Dichtung (52) vorgesehen ist, zwischen dem Einlass (12) und der zweiten Druckkammer (57) eine dritte Dichtung (62) vorgesehen ist und vorzugsweise der zweiten Druckkammer (57) eine vierte Dichtung (71) zugeordnet ist, welche gegenüberliegend zur dritten Dichtung (62) vorgesehen ist, die ebenfalls an die zweite Druckkammer (57) angrenzt, und vorzugsweise der Ventilkörper (37) sich ausgehend von der dem Einlass (12) zugeordneten Durchtrittsöffnung (48) beidseitig in Richtung des jeweiligen Auslasses (14,15) erstreckt und zumindest innerhalb von der ersten und dritten Dichtung (52, 62) geführt ist.

8. Mehrwegeventil nach einem der vorhergehenden Ansprüche, **dadurch gekennzeichnet, dass** der rohrförmige Ventilkörper (37) im Querschnitt rund oder oval ausgebildet ist.

9. Mehrwegeventil nach einem der vorhergehenden Ansprüche, **dadurch gekennzeichnet, dass** eine erste Ventilkammerhülse (51) dem Antrieb (27) zugeordnet ist, welche sich entgegengesetzt zum Antrieb (27) erstreckt und den Ventilkörper (37) umgibt und einer ersten Druckkammer (56) zugeordnet ist, wobei zwischen der ersten Ventilkammerhülse (51) und dem Antrieb (27), insbesondere dem Ventilgehäuse (25), die erste Dichtung (52) aufgenommen ist, welche die erste Druckkammer (56) zum Antrieb (27) abdichtet.

10. Mehrwegeventil nach Anspruch 9, **dadurch gekennzeichnet, dass** die erste Ventilkammerhülse (51) sich durch die erste Druckkammer (56) hindurch erstreckt und die zweite Dichtung (58) aufnimmt, die gegenüberliegend zu der ersten Dichtung (52) der ersten Druckkammer (56) zugeordnet ist und vorzugsweise die zweite Dichtung (58) die erste Druckkammer (56) zu der zweiten Druckkammer (57) trennt.

11. Mehrwegeventil nach einem der Ansprüche 9 oder 10, **dadurch gekennzeichnet, dass** sich an die erste Ventilkammerhülse (51) eine zweite Ventilkammerhülse (66) anschließt, welche sich durch die zweite Druckkammer (57) hindurch erstreckt, wobei in einer Schnittstelle zwischen der ersten Ventilkammerhülse (51) und der zweiten Ventilkammerhülse (66) die zweite Dichtung (58) aufgenommen ist, insbesondere die zweite Ventilkammerhülse (66) der ersten Ventilkammerhülse (51) gegenüberliegend die dritte Dichtung (62) aufnimmt, welche die zweite Druckkammer (57) gegenüber dem Einlass (12) abdichtet, und vorzugsweise dass zwischen der zweiten Ventilkammerhülse (66) und der ersten Ventilkammerhülse (51) eine dritte Ventilkammerhülse (74) vorgesehen ist, welche dem Einlass (12) zugeordnet ist, der zwischen dem ersten Auslass (14) und dem zumindest einen weiteren Auslass (15) positioniert ist.

12. Mehrwegeventil nach einem der Ansprüche 9 bis 11, **dadurch gekennzeichnet, dass** jede Ventilkammerhülse (51, 66, 74) einteilig oder mehrteilig ausgebildet ist und in einer Schnittstelle zwischen zwei Ventilkammerhülsen (51, 66, 74) oder in einer Schnittstelle der mehrteiligen Ventilkammerhülse (51, 66, 74) oder in einer Schnittstelle zwischen der Ventilkammerhülse (51) und dem Antrieb (27) zumindest die zum Ventilkörper (37) weisende radiale Dichtung (52, 58, 62, 71) vorgesehen ist, und vorzugsweise außenliegend zur Schnittstelle zumindest eine Abdichtung (67) vorgesehen ist.

13. Mehrwegeventil nach einem der Ansprüche 9 bis 12, **dadurch gekennzeichnet, dass** die erste und zumindest eine weitere Ventilkammerhülse (51, 66, 74) unlösbar zu einem Cartridgegehäuse (68) miteinander verbunden sind und gemeinsam in eine Einsetzöffnung (17) einer Anschlussstelle (16) einsetzbar sind.

14. Mehrwegeventil nach einem der vorhergehenden Ansprüche, **dadurch gekennzeichnet, dass** der Ventilkörper (37) in eine Einsetzöffnung (17) einer Anschlussstelle (16) einsetzbar ist, wobei die Anschlussstelle (16) einen Einlass (12) und zumindest zwei Auslässe (22, 23) aufweist, die wahlweise durch die Bewegung des Ventilkörpers (37) ansteuerbar sind.

15. Mehrwegeventil nach einem der vorhergehenden Ansprüche, **dadurch gekennzeichnet, dass** das Mehrwegeventil als ein 3/2-Wegeventil ausgebildet ist, welches insbesondere für ein Kältemittel R744 oder R290 vorgesehen ist.
